(19) Europäisches Patentamt
European Patent Office
Office européen des brevets

(11) **EP 3 795 942 B1**

(12) **EUROPÄISCHE PATENTSCHRIFT**

(45) Veröffentlichungstag und Bekanntmachung des Hinweises auf die Patenterteilung:
**27.04.2022  Patentblatt 2022/17**

(21) Anmeldenummer: **20196135.6**

(22) Anmeldetag: **15.09.2020**

(51) Internationale Patentklassifikation (IPC):
**G01B 9/02** $^{(2022.01)}$      **G01B 11/06** $^{(2006.01)}$
**G01B 11/22** $^{(2006.01)}$      **G01B 11/24** $^{(2006.01)}$
**G01B 11/30** $^{(2006.01)}$      **G01B 11/14** $^{(2006.01)}$

(52) Gemeinsame Patentklassifikation (CPC):
**G01B 9/02091; G01B 11/0616; G01B 11/14; G01B 11/24; G01B 11/30;** G01B 2210/56

(54) **VORRICHTUNG UND VERFAHREN ZUR INSPEKTION VON FLACHEN OBJEKTEN UND ZUM ERFASSEN VON GRENZSCHICHTEN DIESER OBJEKTE**

DEVICE AND METHOD FOR INSPECTING FLAT OBJECTS AND FOR DETECTING BOUNDARY LAYERS OF SAID OBJECTS

DISPOSITIF ET PROCÉDÉ D'INSPECTION D'OBJETS PLATS ET DE DÉTECTION DES COUCHES LIMITES DESDITS OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2019  EP 19198274**

(43) Veröffentlichungstag der Anmeldung:
**24.03.2021  Patentblatt 2021/12**

(73) Patentinhaber: **sentronics metrology GmbH**
**68167 Mannheim (DE)**

(72) Erfinder:
 • **Schork, Julian**
  **67434 Neustadt (DE)**
 • **Grünewald, Felix**
  **69469 Weinheim (DE)**

(74) Vertreter: **Durm Patentanwälte PartG mbB**
**Patentanwälte**
**Moltkestrasse 45**
**76133 Karlsruhe (DE)**

(56) Entgegenhaltungen:
**WO-A1-2013/017533      DE-A1-102016 116 029**
**US-B2- 7 139 411**

• **IGOR GUROV ET AL: "Analysis of low-coherence interference fringes by the Kalman filtering method", JOURNAL OF THE OPTICAL SOCIETY OF AMERICA A, Bd. 21, Nr. 2, 1. Februar 2004 (2004-02-01), Seiten 242-3180, XP055570120, US ISSN: 1084-7529, DOI: 10.1364/JOSAA.21.000242**

**Beschreibung**

Die vorliegende Erfindung betrifft eine Vorrichtung zur Inspektion von flachen Objekten und zum Erfassen von Grenzschichten dieser Objekte sowie ein entsprechendes Verfahren. Die Vorrichtung umfasst ein optisches Messsystem zur Messung von Abständen mit einem Sensor und eine Auswerteeinheit zur Auswertung der Ergebnisse des Messsystems. Das Messsystem liefert Peaksignale, deren Position in einem eindimensionalen Signalraum dem Abstand zwischen dem Sensor und einer Grenzschicht oder dem Abstand zwischen Grenzschichten entspricht. Die Auswerteeinheit ist dazu ausgebildet, in einem Trackingprozess die Peaksignale auszuwerten und einem Peaksignal einen vorgegebenen Peaktyp zuzuweisen.

Mittels der Erfindung können Schichtdicken in einem flachen Objekt oder Höhenprofile auf einem flachen Objekt, wie beispielsweise auf Wafern in der Halbleiterherstellung, ermittelt werden. Das Grundkonzept der Erfindung lässt sich jedoch auf eine Vielzahl ähnlicher Anwendungen, die eine Verfolgung und Klassifizierung von Peaks in einem eindimensionalen Signalraum erfordern übertragen.

In mehreren Industriezweigen werden flächige Produkte mit optischen Verfahren auf ihr Oberflächenprofil, die Gesamtdicke des Produktes oder die Schichtdicke von aufgebrachten Schichten hin vermessen. In der Halbleiterindustrie sind dies unter anderem Wafer. Wafer sind Scheiben aus Halbleiter-, Glas-, oder Keramikmaterialien. Die Wafer werden in bestimmten Anwendungen typischerweise an mehreren Orten des Wafers punktuell oder auf Teilflächen geprüft. Auf den Wafern werden die Schaltkreise "Chips" hergestellt, die später vielfältige Aufgaben in elektronischen Geräten der der Rechentechnik, Sensorik, Steuerung und Überwachung erfüllen. Die Dicken der Schichten, die Profile sowie die Gesamtdicke des Wafers sind wichtige Parameter, für welche enge Toleranzbereiche eingehalten werden müssen, um eine Chip-Produktion mit hoher Ausbeute zu realisieren. Dafür werden genaue und schnelle Messverfahren benötigt, die eine präzise Messung der Dicken- und Profilwerte ermöglichen. Typischerweise haben aktuelle Waferstrukturen Dicken von 40 bis 2000 Mikrometern ($\mu$m). Die aufgebrachten Schichten bestehen aus vielfältigen, unterschiedlichen Materialien und haben typischerweise Dicken zwischen einigen Nanometern (nm) und mehreren 10 $\mu$m.

Analoge und ähnliche Aufgabenstellungen sind für andere Strukturen und in anderen Industriezweigen zu lösen. Solche Aufgaben sind z.B. die Vermessung der Höhe von Schichten oder Leiterbahnen und anderen Strukturen auf Elektronik-Boards (Leiterplatten) oder die Vermessung einer Vielzahl von Mechanisch-elektrischen Systemkomponenten (MEMS) wie Beschleunigungs-, Druck und Geschwindigkeitssensoren oder Gyroskope. Andere gleichartige Aufgaben sind die Vermessung von Folienbeschichtungen oder Lack- und Farbschichten auf Konstruktionsteilen.

Gemeinsam ist allen diesen Anwendungen der Bedarf an genauer, schneller Prüfung an einer hohen Anzahl von in der Regel gleichartigen Orten auf der Oberfläche der Objekte. Solche Objekte sind Leiterplatten, Wafer, Displays, Folien, Verkleidungsbleche und dergleichen. Gemeinsam ist den Anwendungen auch der Einsatz von Sensoren zur Erzeugung von Höhen- und/oder Schichtdickendaten der untersuchten Strukturen.

In herkömmlichen Verfahren zum Objekttracking werden vielfältige Informationen der zu verfolgenden Objekte genutzt. US7139411 und US7684592 beschreiben Verfahren zur Identifizierung und Verfolgung von Personen auf Basis von Bildern. Für die Verfolgung wird u.a. ein Kalman-Filter genutzt. Die Identifizierung basiert allerdings auf der Auswertung der Bildinformation, wie sie in vergleichbarem Umfang für die Inspektion von flachen Objekten, insbesondere von Wafern in der Halbleiterindustrie, nicht vorliegen. Die Verwendung eines Kalman-Filters wird im Zusammenhang mit Interferenzen in IGOR GUROV ET AL: "Analysis of low-coherence interference fringes by the Kalman filtering method", JOURNAL OF THE OPTICAL SOCIETY OF AMERICA A, Bd. 21, Nr. 2, 1. Februar 2004, US ISSN: 1084-752 beschrieben. Die WO 2013/017533A1 beschreibt die Möglichkeit eines Trackings unter Berücksichtigung eines linearen Verhältnisses. Es wird vorgeschlagen, vorab gewonnene Erkenntnisse über die Rolle von einzelnen Echos für das Tracking zu verwenden. Die DE 10 2016 116 029 A1 beschreibt ein Verfahren zur Track-basierten Klassifikation von Objekten im Zusammenhang mit dem autonomen Fahren.

In US6278401 wird ein Verfahren offenbart, in dem die Zuordnung zu Objekttypen auf der Nutzung von Wahrscheinlichkeitsberechnungen für die Zuordnung und insbesondere auf der Nutzung von mehreren Sensoren beruht. Dieses Verfahren lässt sich jedoch ebenfalls nicht auf den hier zugrundeliegenden Anwendungszweck einsetzen.

Den obengenannten und hier betrachteten Anwendungen ist weiterhin gemeinsam, dass die ermittelten Rohdaten für verschiedene Sensortypen auf die Grenzflächen zwischen den Schichten bzw. zwischen den Objekten und der Umgebung sensitiv sind und die Zuordnung zu den Grenzflächen nicht unmittelbar aus den Daten ablesbar ist. In der Regel erzeugen diese Daten Peaks in den Roh-Signalen oder einer aus den Rohdaten abgeleiteten ein-dimensionalen Datendarstellung. Für die korrekte Zuordnung dieser Peaks zu den Grenzflächen ergibt sich daher häufig die Aufgabe, diese Peaks über den Messverlauf hinweg zu verfolgen und ihre Bewegung im ein-dimensionalen Datenraum sowie andere Parameter für die Klassifizierung der Peaks nutzbar zu machen.

Diese Peakverfolgung und Zuordnung müssen schnell und zuverlässig erfolgen.

Es stellt sich somit die Aufgabe, eine Vorrichtung und ein Verfahren vorzuschlagen, mit dem eine Peakverfolgung und Zuordnung schnell und zuverlässig durchgeführt werden können, um eine Inspektion auch von relativ großen Objekten und mit vielen Messpunkten in kurzer Zeit zu ermöglichen.

Gelöst wird die vorliegende Aufgabe mit einer Vorrichtung zur Inspektion von flachen Objekten und zum Erfassen von Grenzschichten mit den Merkmalen des Anspruchs 1. Die Aufgabe wird auch gelöst und durch ein Verfahren mit den Merkmalen des Anspruchs 16.

Die erfindungsgemäße Vorrichtung zur Inspektion von flachen Objekten und zum Messen von Grenzschichten dieser Objekte ist ein optisches Messsystem zur Messung von Abständen mit einem Sensor. Das Messsystem arbeitet nach dem Verfahren der spektralen Interferenz. Es liefert Peaksignale, deren Position in einem eindimensionalen Signalraum dem Abstand zwischen dem Sensor und einer Grenzschicht des Objekts oder dem Abstand zwischen Grenzschichten des Objekts entspricht. Bei dem als Beispiel genutzten Sensor entstehen diese Peaksignale durch die Fourier-Transformation aus den aufgenommen Spektraldaten, im Folgenden daher mit "FT-Signale" bezeichnet. Eine Auswerteinheit als Teil der Vorrichtung ist dazu geeignet und bestimmt, in einem Trackingprozess die Peaksignale auszuwerten und einem Peaksignal einen vorgegebenen Peaktyp zuzuweisen. Beispielsweise können Peaks als reelle Peaks, virtuelle Peaks und Autokorrelationspeaks klassifiziert werden.

Die Auswerteinheit ist weiterhin dazu ausgebildet, Peaksignale, die in einer Messung erfasst wurden, verschiedenen Tracks zuzuordnen. Hierdurch wird eine Peak-Signal-Kurve erzeugt. Die Tracks werden jeweils mit dem zugeordneten neuen Peaksignal einer weiteren Messung aktualisiert. Die Zuordnung eines Peaksignals zu einem Track basiert dabei auf der Position oder der Änderung der Position des Peaksignals in dem ein-dimensionalen Signalraum. Dabei werden alle Peaksignale eines Tracks dem gleichen Peaktyp zugewiesen. Eine Änderung eines Peaksignals für die nächste Messung wird erfindungsgemäß mittels eines Schätzers geschätzt. Der Schätzer kann bevorzugt ein Filter sein, sehr bevorzugt ein Kalman-Filter, der besonders bevorzugt an die einzelnen Tracks adaptiert sein kann.

Dieser echtzeitfähige Peak-Tracking-Algorithmus, der in der Auswerteinheit implementiert sein kann und von der Auswerteinheit ausgeführt wird, weist den

Vorteil auf, dass eine Verfolgung mehrerer Peaks anhand von deren Bewegungsmustern möglich ist. So lässt sich eine Peaktyp-Klassifizierung vornehmen, bevorzugt abhängig vom Peaktyp. Die Klassifizierung ist also abhängig davon, ob es sich bei dem Peak um einen reellen Peak, einen virtuellen Peak oder einen Autokorrelationspeak handelt. Die Kategorisierung der Peaks ist bevorzugt ableitbar von seiner Position in Abhängigkeit von der Autofokusposition des optischen Messsystems im Vergleich zu dem zu vermessenden Objekt. Detailliertere Erläuterungen werden im Folgenden gegebenen.

Die Verfolgung dieser ermittelten Peaks basiert auf der Positionsinformation, die für jeden Scan oder Messdurchlauf bevorzugt in Form einer Peakliste als Eingangsinformation zur Verfügung stehen kann. Geeignete Zuordnungen von bereits detektierten Peakpositionen zu bereits mit detaillierteren Informationen versehenen Tracks oder Scans können Bewegungsmodelle mit zugeordneten Messdaten aktuell halten und aktualisieren. Auf deren Basis lassen sich Zustands- bzw. Positionsschätzungen für den nächsten Scan errechnen. Diese Zustandsschätzungen dienen lediglich dazu, weitere Messwerte in einem Folgescan oder einer weiteren Messung den bereits registrierten und bevorzugt verifizierten Tracks zuzuweisen und somit eine fortlaufende Track-Aktualisierung der beobachteten Peaks zu erreichen. Ein Track umfasst dabei eine Mehrzahl von Peaksignalen, die einer Kurve bzw. einem Track zugeordnet sind, alle der gleichen Kategorie angehören und somit die Bewegung eines Peaks darstellen.

Erfindungsgemäß zeichnet sich die Auswerteinheit dadurch aus, dass eine robuste Bewegungsverfolgung von einzelnen Peaksignalen bzw. einzelnen Tracks auch in komplexen Situationen möglich ist. Derartige komplexe Situationen können eine zeitweise aussetzende Peakdetektion, unterschiedliche Formen von Peaküberlagerungen sowie zufällige Störeinflüsse wie etwa zufällige Peakbewegungen umfassen. Die Bewegungsverfolgung mittels der erfindungsgemäßen Auswerteinheit funktioniert auch in diesen Situationen robust und fehlerfrei.

Die Verwendung eines Schätzers zur Schätzung der Änderung eines Peaksignals für die nächste Messung weist den Vorteil auf, dass hierdurch eine Vorhersage gemacht werden kann, wo mit dem Signal des Peaks in dem eindimensionalen Signalraum zu rechnen ist. Hierdurch lässt sich das Verfahren qualitativ verbessern sowie eine deutlich schnellere Verarbeitung ermöglichen.

In einer bevorzugten Ausführungsform umfasst der in der Auswerteinheit hinterlegte Trackingprozess wenigstens zwei der folgenden Prozessschritte:

1. Zuordnen eines erfassten Peaksignals zu einem (bestehenden) Track

2. Aktualisierung eines bestehenden Tracks mit den Peaksignalen der aktuellen Messung bzw. des aktuellen Scans

3. Anpassung der Eigenschaften des Schätzers, basierend auf einem Analysieren der Messung und einem Analysieren des Rauschens des Prozesses

4. Erzeugen eines neuen Tracks, basierend auf nicht zuordenbaren Peaksignalen.

Bei der Zuordnung eines erfassten Peaksignals zu einem bestehenden Track wird das Assoziationsproblem auch bei einem Multiple-Target-Tracking gelöst. Hier wird eine Gruppe von n Peaks des aktuellen Scans bzw. der aktuellen Messung einer Gruppe von m Tracks, die zum aktuellen Zeitpunkt die Verfolgung der bisher identifizierten m Peaks darstellen, zugeordnet. Fehlzuordnungen werden bestmöglich vermieden, wobei diese Fehlzuordnungen sowohl die Zuordnung zu einem "falschen" Track umfassen als auch das fälschlicherweise Generieren eines neuen Tracks aus einem nicht zugeordneten Peaksignal.

Bei der Aktualisierung eines bestehenden Tracks kann für jeden Track eine Zustandsaktualisierung erfolgen. Diese kann mit Zustandsschätzungen für den nächsten Scan bzw. die nächste Messung auf Basis eines bekannten Schätzverfahrens erfolgen. Aufgrund der hinterlegten Peak-Bewegungsmodelle wird für jeden Track vorzugsweise ein klassisches Filter erstellt, bei welchem die zufälligen Störbewegungen das nicht modulierbare Prozessrauschen darstellen.

Vorzugsweise erfolgt ebenfalls eine Anpassung der Eigenschaften des Filters bzw. des Schätzers. Hierbei kann für jeden Track laufend durch Systemanalysen hinsichtlich des Messrauschens und des Prozessrauschens eine Anpassung individuell erfolgen, sodass die Schätzparameter bzw. Filterparameter für jeden Track individuell angepasst werden können.

Bei der Erzeugung oder Initialisierung eines neuen Tracks aus nicht zugeordneten Messdaten oder Peaksignalen können vorzugsweise auch eine Initialisierung des Schätzers bzw. des Filters sowie deren Erweiterungen erfolgen.

In einer bevorzugten Ausführungsform ist die Auswerteeinheit dazu eingerichtet und ausgebildet, eine Track-Klassifizierung auszuführen. Eine Track-Klassifizierung umfasst bevorzugt mehrere mögliche Klassifizierungsmodule, die eine Track-Verifizierung, eine Bewegungsanalyse und eine Track-Ausgrenzung aufweisen. Vorzugsweise umfasst die Track-Klassifizierung wenigstens zwei dieser Klassifizierungsmodule.

Vorzugsweise ist die Track-Verifizierung dadurch beschrieben, dass eine Verifizierung eines Tracks als Messreihe erfasster Peaksignale und/oder eine Verifizierung nicht zuordenbarer Peaksignale als Ausgangspunkt eines neuen Tracks verwendet wird. Es wird hierbei also nochmals überprüft, ob die gemachte Zuordnung zu einem bestehenden Track richtig ist. Gleichzeitig wird durch die Überprüfung, die vorzugsweise mit einer gewissen Verzögerung stattfindet, verhindert, dass zu schnell ein neuer Track erzeugt wird. Beispielsweise kann hierzu eine Kostengewichtung zwischen verifizierten und nicht verifizierten Tracks durchgeführt werden.

Vorzugsweise umfasst die Bewegungsanalyse das Analysieren der Position oder der Änderung der Position eines Peaksignals und die Zuordnung des Peaksignals zu einem der Peaktypen auf Basis der Analyse. Die Analyse der Änderung der Position erfolgt bevorzugt durch eine Analyse der Bewegung des Peaksignals. Diese Bewegungsanalyse wird vorzugsweise für jeden Track individuell durchgeführt. Sie liefert und bestätigt im Idealfall das durch das Peaktracking angedachte Ergebnis. Vorzugsweise erfolgt die Bewegungsanalyse in Abhängigkeit des Systemverhaltens bzw. des Peakverhaltens. Bewegungsanalysen werden folglich bevorzugt in Abhängigkeit der Systemgenauigkeit, die dem Rauschverhalten entspricht, der Störeinflüsse, die zufällige Rauschbewegungen widerspiegeln, sowie der Fokusbewegung des Messsystems. Die Bewegungsanalysen werden zur Deutung des Peaktyps vorgenommen.

Die Track-Ausgrenzung umfasst vorzugsweise auch ein Löschen eines Tracks in Abhängigkeit eines vordefinierten oder angepassten Kontinuitätskriteriums. Die Track-Ausgrenzung wird verwendet, um eine Reduzierung der Trackliste, d. h. der Anzahl der bestehenden Tracks, um veraltete oder nicht relevante Einträge bzw. Tracks durchzuführen. Sie kann bevorzugt auf einer trackspezifischen Zuordnungskontinuität beruhen und von dieser abhängig sein.

In einer bevorzugten Ausführungsform beeinflusst der Trackingprozess zur Zuordnung eines erfassten Peak-Signals zu einem Track durch den gezielten Einsatz der Abstandsregulierung (Autofokus) zwischen Sensor und Messobjekt die Peakposition unmittelbar und benutzt die daraus resultierende Peakpositionsveränderung für die Zuordnung zu einem Track.

In einer bevorzugten Ausführungsform umfasst der Trackingprozess, der ein erfasstes Peaksignal einem bestehenden Track zuordnet, einen Global-Nearest-Neighbor-Algorithmus. Dieser Trackingprozess ist vorzugsweise in der Auswerteeinheit implementiert. Ebenfalls bevorzugt ist der Global-Nearest-Neighbor-Algorithmus ein Algorithmus basierend auf der sogenannten ungarischen Methode.

In einer bevorzugten Ausführungsform ist der in der Auswerteeinheit implementierte Schätzer ein Kalman-Filter. Bevorzugt wird für jeden Track ein KalmanFilter implementiert, bei dem bevorzugt nach dem klassischen Kalman-Filter-prinzip eine Zustandsaktualisierung für den aktuellen Scan bzw. den aktuellen Messdurchlauf und bevorzugt anschließend eine Zustandsschätzung für den Folgescan durchgeführt wird. Die Zustandsaktualisierung und Zustandsschätzung erfolgen für den aus der Messdaten-Track-Assoziation bzw. der Peaksignal-Track-Zuordnung zugeordneten Messwert.

Vorzugsweise umfasst der Kalman-Filter ein Systemmodell, das auf einer konstanten Geschwindigkeit der Peaksignale basiert. Alternativ und ebenfalls möglich ist ein Systemmodell, das eine variable oder variierende Geschwindigkeit der Peaksignale zugrunde legt.

Ebenfalls bevorzugt hat der Kalman-Filter ein Systemmodell, das auf einer konstanten Beschleunigung der Peaksignale basiert.

In einer bevorzugten Ausführungsform der Erfindung wird in dem Kalman-Filter eine Prozess-Kovarianz verwendet. Durch die Prozess-Kovarianz wird bevorzugt der Einfluss einer A-Priori-Schätzung auf den Zustandswert der Vorrichtung begrenzt.

Vorzugsweise wird die Prozess-Kovarianz dazu verwendet, um die Kovarianz eines Schätzfehlers zu erhöhen und den Einfluss der A-Priori-Schätzung auf den Systemzustand der Vorrichtung zu begrenzen.

In einer bevorzugten Ausführungsform ist der Kalman-Filter dazu ausgelegt, um für eine Zeitaktualisierung und Schätzung sowie für eine Messwertaktualisierung und Korrektur in dem Trackingprozess verwendet zu werden. Besonders bevorzugt wird nach jeder der Aktualisierungen der Kalman-Filter mit den A-Posteriori-Ergebnissen der vorherigen Messung verwendet.

In einer bevorzugten Ausführungsform der Erfindung wird der Einfluss des Rauschens der Vorrichtung auf den Trackingprozess durch Bildung eines gleitenden Mittelwerts der erfassten Peaksignale über eine vorgegebene Anzahl von Messungen reduziert. Je größer die Anzahl der Messungen ist, desto eher werden Ausreißer oder Rauschvorgänge ausgeglichen. In der Praxis kann die Anzahl der Messungen zur Bestimmung des gleitenden Mittelwerts entweder im Vorhinein festgelegt sein oder aus den Messwerten der vorherigen Messungen oder anderen Systemparametern laufend neu festgelegt werden.

In einer bevorzugten Ausführungsform weist die erfindungsgemäße Vorrichtung einen Ringpuffer auf. Ein Ringpuffer ist ein Speicherbereich, der zur Zwischenspeicherung ("Pufferung") von Daten so benutzt wird, dass neue Daten am Ende des Bereiches eingeschrieben, zu entnehmende Daten am Anfang des Bereichs gelesen und gelöscht sowie die im Puffer enthaltenen Daten bei jedem Auslesen in Richtung des Anfangs nachgerückt werden. Der Ringpuffer wird bevorzugt zur Bestimmung des gleitenden Mittelwerts verwendet, um den Einfluss des Rauschens der Vorrichtung zu reduzieren. Die Größe des Ringpuffers kann im Vorhinein festgelegt oder variabel sein.

Vorzugsweise wird ein Toleranzband oder ein Toleranzbereich für die Position eines Peaksignals verwendet, um eine Zuordnung eines Peaksignals zu einem Track durchzuführen. Das Toleranzband erstreckt sich dabei bevorzugt um den Track herum, sodass ein innerhalb des Toleranzbands oder Toleranzbereichs liegendes Peaksignal einem Track zugeordnet wird. Bevorzugt ist die Größe des Toleranzbands oder des Toleranzbereichs abhängig von der gleitenden Standardabweichung der Position des Peaksignals zu dem Track. Die Größe des Toleranzbands bzw. -bereichs kann während der Messung angepasst werden und durch die Ermittlung der Standardabweichung vorgegeben sein bzw. angepasst werden. Da die Peaksignale Signale im ein-dimensionalen Signalraum sind, ist das Toleranzband bzw. der Toleranzbereich bevorzugt ebenfalls ein-dimensional.

In einer bevorzugten Ausführungsform wird die Nutzung eines Tracks für eine Verfolgung von Peaksignalen freigegeben, bevor ein Track verwendet werden kann. Die Freigabe der Nutzung erfolgt bevorzugt in einer oben beschriebenen Track-Verifizierung und ist in einem Klassifizierungsmodul der Track-Klassifizierung implementiert. Vorzugsweise erfolgt die Freigabe der Nutzung eines Tracks, wenn der Track eine vorgegebene Anzahl von Zuordnungen von Peaksignalen zu dem Track bereits aufweist. Umfasst ein Track nur wenige Peaksignale, so ist die Wahrscheinlichkeit groß, dass es sich bei den Peaksignalen des Tracks um Ausreißer oder Messwerte handelt, die auf Störeinflüssen beruhen können. Ein derartiger Track wird dann vorzugsweise gelöscht. Die Wahrscheinlichkeit dafür, dass ein Peak ein Ausreißer ist, kann also abhängig sein von der Anzahl der Peaksignale des bestehenden Tracks, dem der Peak zugeordnet werden soll.

Das der Erfindung zugrunde liegende Verfahren zur Inspektion von flachen Objekten und zum Erfassen von Grenzschichten dieser Objekte, das zur Lösung der gestellten Aufgabe dient, hat mehrere Schritte. Zunächst erfolgt ein Messen von Abständen eines Objekts mittels eines Sensors eines Messsystems. In einem weiteren Schritt werden Peaksignale erzeugt, deren Position in einem eindimensionalen Signalraum dem Abstand zwischen dem Sensor und einer Grenzschicht des Objekts oder zwischen Grenzschichten des Objekts entspricht. Das Auswerten der erfassten Peaksignale in einem Trackingprozess stellt einen weiteren Schritt des Verfahrens dar. Ein weiterer Schritt umfasst das Zuweisen eines Peaksignals zu einem vorgegebenen Peaktyp. Das Zuordnen der in einer Messung erfassten Peaksignalen zu unterschiedlichen Tracks ist ebenfalls ein Schritt, wobei alle Peaksignale eines Tracks dem gleichen Peaktyp zugewiesen sind. Weiterhin erfolgt eine Aktualisierung des Tracks mit den neu zugeordneten Peaksignalen, wobei die Zuordnung eines Peaksignals zu einem Track bevorzugt auf der Änderung der Position des Peaksignals in dem eindimensionalen Signalraum basiert. Die Änderung eines Peaksignals für die nächste Messung wird erfindungsgemäß mittels eines Schätzers geschätzt. Dabei wird vorzugsweise ein Kalman-Filter als Schätzer eingesetzt, wobei die Filterparameter für jeden Track individuell vorhanden sein können.

Im Folgenden wird ein Ausführungsbeispiel der Erfindung unter Bezugnahme auf die beigefügten Abbildungen beschrieben. Es zeigen:

Figur 1a     ein Prinzipbild für reflexionserzeugende Grenzübergänge einer Schicht;

Figur 1b     Mögliche Quellen für Autokorrelationspeaks "AKP" in einer dreischichtigen Messprobe;

Figur 2a     schematisch das Peak-Verhalten bezüglich des interferometrischen Nullpunkts, in Abhängigkeit der Autofokusposition eines Sensors;

Figur 2b      die Peakintensität dreier Peaks im FT-Signal in einer exemplarischen Beispielanordnung;

Figur 2c      eine schematische Darstellung der Wechsel der Peakpositionen aufgrund der Autofokusbewegung eines Sensors;

Figur 2d      schematische Darstellung der Peakpositionen über der Autofokusposition, markiert nach Peak-Typ;

Figur 2e      schematische Darstellung der Peakpositionen über der Autofokusposition, markiert nach Peaknummer;

Figur 3       eine schematische Darstellung der in einer erfindungsgemäßen Auswerteeinheit implementierten Verfahrensschritte;

Figur 4       eine schematische Darstellung eines Szenarios für eine MessdatenTrack-Assoziation;

Figur 5       eine schematische Darstellung von wiederholenden Teilprozessen eines Kalman-Filters in einer Prädiktor-Korrektor-Arbeitsweise;

Figur 6       eine schematische Darstellung eines Ablaufs einer Zustandsaktualisierung und Zustandsprädiktion mittels eines Kalman-Filters;

Figur 7a      eine schematische Darstellung einer Zuordnung von Messwerten zu einem Track bei schwacher Rauschempfindlichkeit;

Figur 7b      eine schematische Darstellung einer Zuordnung von Messwerten zu einem Track bei starker Rauschempfindlichkeit; und

Figur 8       eine schematische Darstellung eines Tracks mit Zuordnungspause und Toleranzbereichen für die Zuordnung von Messwerten.

Die Erfindung wird nun beispielhaft an einem spektralen Interferometrie-Verfahren beschrieben. Sie kann jedoch ohne Beschränkung der Allgemeinheit auf ähnliche Verfahren übertragen werden. Das spektrale Interferometrie-Verfahren, nachfolgend als SCI-Verfahren bezeichnet (SCI = Spectral Coherence Interferomtry) und selbst nicht Gegenstand der Erfindung, nutzt die Tatsache, dass aus dem aufgenommenen Interferenzsignal mittels der Fourier-Transformation für jede reflexionserzeugende Grenzfläche ein Peak auf der Frequenzskala des Sensorsignales ermittelt werden kann. Gleichzeitig wird der Abstand zwischen Sensor und Messobjekt durch eine Autofokuseinrichtung permanent nachgeregelt, um die Peaks im Arbeitsfenster des Sensors zu halten. Die Autofokuseinrichtung ("AF") ist als motorisches Stellglied ausgebildet, welches mit einem üblicherweise genutzten Antrieb (z.B. ein Piezosteller oder ein LinearMotor) die Sensoreinheit senkrecht zur Probenfläche bewegt. Der AF nutzt die mit dem Sensor aufgenommenen und in der Verarbeitungseinheit ausgewerteten Signale als Eingangsgröße für seine Regelung. Durch diese Autofokusnachstellung ändern sich im Allgemeinen die Abstände verschiedener Grenzflächen vom Sensor, somit auch der vom Samplestrahl zurückgelegte Weg und damit die Position des zugehörigen Peaks auf der Frequenzskala. Diese Peak-Bewegung auf der Frequenzskala wird in der vorliegenden Erfindung für das Peak-Tracking und die Zuordnung der Peaks zu bestimmten Typen genutzt. Eine besonders eindeutige Änderung ergibt sich, wenn man einen vorgegebenen Abstandsbereich für den Abstand Sensor zu Objekt durchfährt und die entstehende Peak-Bewegung auf der Frequenzskala auswertet.

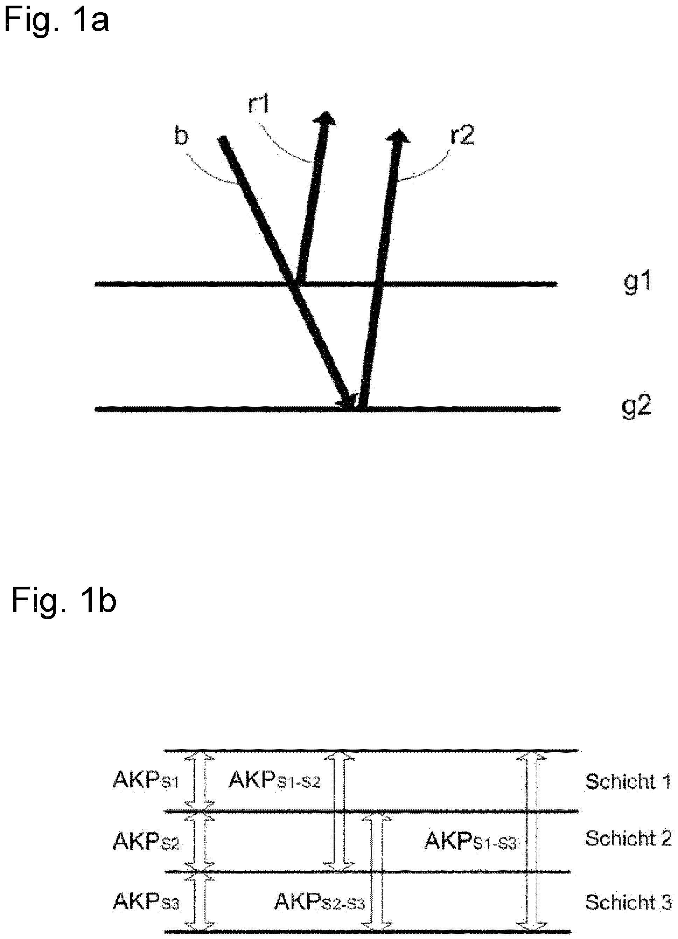

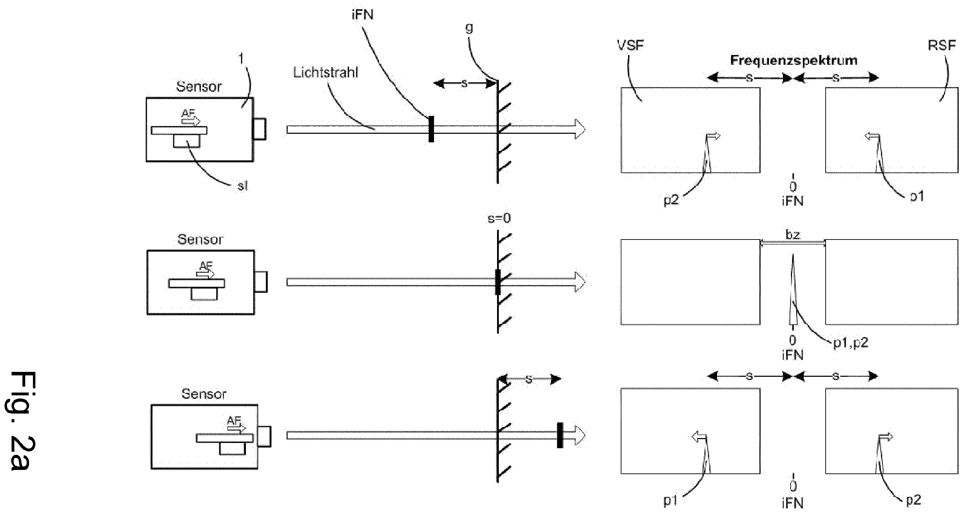

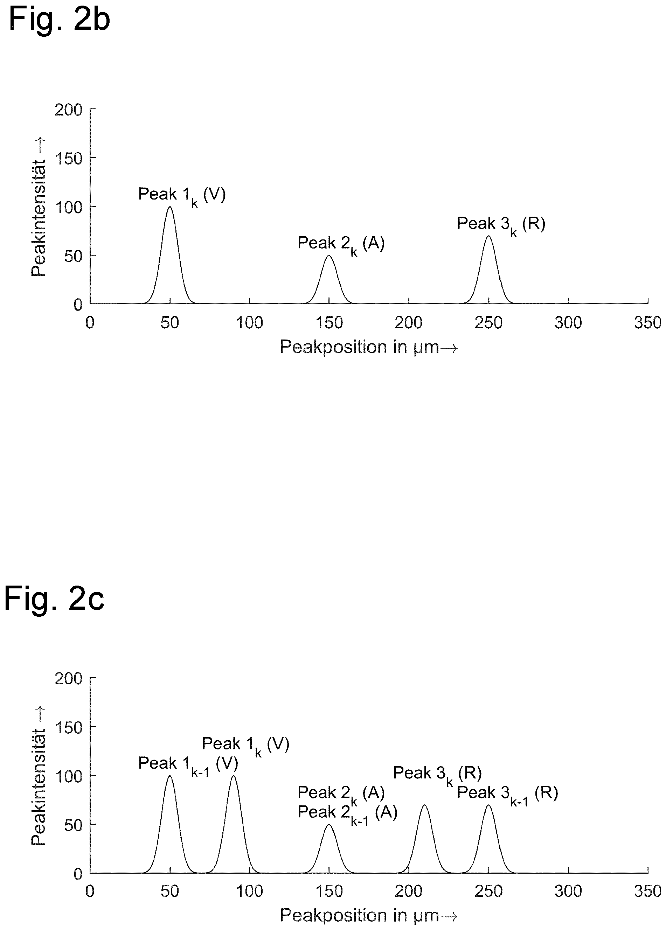

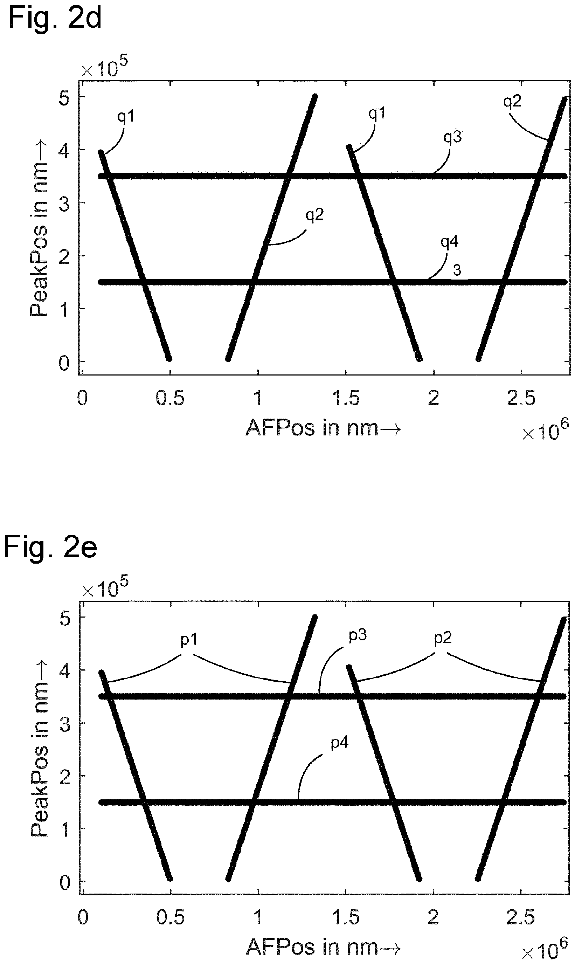

Anhand der Figuren 1 und 2 sind nachfolgend zunächst allgemein dieses Verfahren und die entstehenden Ausgangsdaten detaillierter beschrieben:

Peakbewegung

Das der Messung mittels SCI zugrundeliegende Messsignal ist die Intensität des durch Interferenz eines auf das Messobjekt gerichteten Sample-Strahles b und eines auf einen Referenzspiegel gerichteten Referenzstrahles entstehenden Interferenzsignals. Es entsteht für jeden reflexionserzeugenden Grenzübergang eines Messobjektes (Reflexion r1 an Grenzschicht g1 und Reflexion r2 an Grenzschicht g2 dargestellt in Figur 1a) eine Frequenz in Form eines Peaks im FT-Signal. Die resultierenden Peaks im Frequenzspektrum werden im Folgenden als SCI-Peaks bezeichnet, deren Position im Frequenzbereich abhängig vom Gangunterschied des Referenzstrahls und eines Samplestrahls ist. Ändert sich einer der beiden Weglängen (Referenzstrahl oder Samplestrahl) so verschieben sich die Peaks im Frequenzspektrum.

Zusätzlich zu den bereits dargelegten Interferenzerscheinungen, sind auch solche Interferenzen zu betrachten, die durch die Interferenz der an unterschiedlichen Grenzübergängen reflektierten Samplestrahlen entstehen (Autokorrelation). Folglich sind für diese Interferenzen im FT-Signal Peaks zu erwarten, die an einer konstanten Frequenz verharren. Die hierbei entstehenden Peaks sind somit unabhängig vom Verhältnis der Samplearmlänge zur Referenzarmlänge des Messsystems und werden als Autokorrelationspeaks (AKP) bezeichnet. Grundsätzlich kann aus jeder Schicht einer Messprobe ein AKP entstehen. Figur 1b zeigt eine dreischichtige Messprobe, bei der bis zu sechs Autokorrelationspeaks im Signal vorkommen können. Basierend auf den Schichten mit reflektierenden Grenzflächen ergibt sich die Ausführung gemäß Figur 1b.

Sämtliche entstehenden Interferenzsignale sind bevorzugt cosinusförmig, d.h. alle Peaks im positiven Frequenzbereich sind spiegelsymmetrisch zu den Signalanteilen im negativen Frequenzbereich. Da in diesem Szenario zu jedem Zeitpunkt der negative Frequenzbereich das symmetrische Gegenbild zum positiven Frequenzbereich ist, wandern die betragsmäßig gleichen Frequenzanteile (Peaks), bei variierendem Gangunterschied zwischen den an der Interferenz beteiligten Reflexionsstrahlen, gleichermaßen auf den Frequenznullpunkt zu oder von ihm fort.

Der Frequenznullpunkt wird auch als interferometrischer Nullpunkt bezeichnet, an welchem der Gangunterschied zwischen Referenz- und Samplestrahl null beträgt. Während die Interferenz, die zu einem AKP führt, lediglich durch die Zusammensetzung der Messprobenschichten bestimmt wird, kann bei der SCI-Messmethode die Interferenz zwischen dem Referenzstrahl und einem Samplestrahl aktiv durch das Verfahren (Bewegen) des Sensor-Autofokus beeinflusst werden.

Eine mögliche Realisierung einer Autofokuseinheit besteht darin, lediglich den Abstand zwischen Sensor und Messobjekt zu bewegen ohne dabei die Referenzarmlänge zu verändern (Figur 2a, Schlitten sl im Sensor 1). Folglich variieren die Samplearmlängen und somit der Gangunterschied der Interferenzsignale, was wiederum zu einem Wechsel der SCI-Peak-Positionen im FT-Signal führt. Demnach ist es durch das Variieren der Autofokusposition möglich, einen größeren Bereich einer Messprobe zu untersuchen, indem je nach Autofokusposition unterschiedliche Grenzflächen im vom Sensor erfassten Frequenzspektrum gemessen werden.

In Figur 2a ist hierzu ein Szenario dargestellt, in dem eine Messproben-Grenzfläche in einer Reflexion des einfallenden Quellenstrahls resultiert und dadurch einen SCI-Peak im FT-Signal erzeugt. Es ist zu erkennen, dass der Gangunterschied des Referenz- und Samplestrahls und somit die Differenz s aus dem interferometrischen Nullpunkt (IFN) und dem Grenzübergang g in direktem Zusammenhang mit der Position eines Peaks im Frequenzspektrum steht.

Der vom Sensor ausgelesene Frequenzbereich entspricht dem positiven Frequenzspektrum (rechts des Nullpunkts). Der Frequenzbereich, aus dem Informationen entnommen werden können, ist in Figur 2a schraffiert hinterlegt und wird als (reelles) Sichtfenster RSF bezeichnet. Er erstreckt sich bei einem beispielhaften Sensor z.B. von $160\,\mu$m bis $700\,\mu$m Abstand zwischen Sensor und Objekt. In den niedrigen Frequenzlagen erstreckt sich die sogenannte *Blindzone bz,* in welcher kein Zugang zu den Informationen des Frequenzbereichs besteht. Sie befindet sich beim Beispielsensor zwischen $-160\,\mu$m und $160\,\mu$m. Für den Sensor entspricht diese Zone daher einem Bereich bekannter Größe, in welchem Peaks nicht sichtbar sind.

In der ersten Zeile von Figur 2a ist demnach ein Peak p1 zu sehen, dessen Abstand s zum Frequenznullpunkt dem Abstand zwischen dem interferometrischen Nullpunkt und dem Grenzübergang entspricht. Wenn nun die Autofokuseinheit auf die Messprobe zubewegt wird (zweite Zeile der Figur 2a), verringert sich der Abstand s. Der Grenzübergang rückt näher an den interferometrischen Nullpunkt IFN heran und der Peak p1 wandert aufgrund des veränderten Interferenzsignals im sogenannten reellen (Sicht-)Fenster nach links auf den Nullpunkt zu. Aufgrund dieses Verhaltens wird ein solcher Peak p1 im Folgenden auch als *reeller Peak* bezeichnet.

Wird nun die Autofokuseinheit weiter in Richtung der Messprobe verfahren, bis der Grenzübergang den interferometrischen Nullpunkt IFN überquert hat (dritte Zeile der Figur 2a), so wandert der reelle Peak aus dem positiven Frequenzspektrum heraus in den negativen Frequenzbereich. Gleichzeitig überquert der Peak p2 des sogenannten virtuellen (Sicht-)Fensters VSF den Frequenznullpunkt und wird weiterhin *als virtueller Peak* p2 im positiven Frequenzspektrum vom Sensor erfasst. Der Typ eines Peaks ist also anhand seiner Bewegung in Abhängigkeit der Autofokusbewegung charakterisierbar. Jedes Auslesen des Messsignals zu einem bestimmten Zeitpunkt der Messung wird in dieser Beschreibung als Scan bezeichnet.

Signalverarbeitung von Rohsignal zu Peakposition

Für das Peak-Tracking werden die Rohdaten derart ausgewertet, dass aus dem FT-Signal die Peakpositionen errechnet und als Inputgröße zur Verfügung gestellt werden. Dies resultiert in einer *Peakliste* für den aktuellen Scan mit den folgenden Informationen:

- Peakposition der detektierten Peaks
- Peakintensität der detektierten Peaks
- Autofokusposition des aktuellen Scans
- Anzahl der detektierten Peaks des aktuellen Scans

Da der Typ eines Peaks nur durch eine bekannte Autofokusbewegung charakterisierbar ist, enthält die Peakliste selbst keine Peak-Typ-Informationen.

Visualisierung der Datensignale

Die beschriebene Messtechnik liefert je nach Messprobe und Position des Autofokus unterschiedliche Datensignale, die zu einem beliebigen Zeitpunkt z.B. wie in Figur 2b dargestellt werden können. Die eingeklammerten Abkürzungen hinter der Peakbezeichnung deuten auf dessen Typ hin (V ≙ virtueller Peak, R ≙ reeller Peak, A ≙ Autokorrelationspeak).

Jeder gaußförmige Peak im FT-Signal ist ein potentielles *Tracking-Objekt,* d.h. der Peak spiegelt beispielsweise eine Grenzfläche in einem Objekt wider. Wird der Sensor durch die Autofokuseinheit z.B. um $40\mu m$, von Zeitpunkt k-1 auf Zeitpunkt k, auf das statische Messobjekt zubewegt, so ist auch der Positionswechsel des reellen und des virtuellen Peaks (SCI-Peaks) um die Distanz $40\mu m$ in Figur 2c erkennbar. Entsprechend der physikalischen Gegebenheiten bleibt die Position des Autokorrelationspeaks (AKP, hier Peak $2_k$ (A)) bei Variation der Autofokusposition hingegen unverändert.

Eine alternative Darstellung der Peakpostitionen im Vergleich zur Autofokusposition ist in Figur 2d und Figur 2e nach Peaktyp gezeigt. In Figur 2d gibt die Ordinatenachse den qualitativen und quantitativen Rahmen der Peakpositionen eines gesamten Datensatzes an und wird mit dem Begriff PeakPos betitelt. Die Abszissenachse kennzeichnet die jeweilige Autofokusposition zu jeder Peakdetektion und wird mit der Abkürzung AFPos gekennzeichnet. Hier ist also die Abhängigkeit der Peakposition von der Autofokusposition beispielhaft dargestellt.

Mit dem Vorwissen aus der Messtechnik sind hier die gekennzeichneten Peak-Klassifizierungen aus Sicht eines Beobachters anzunehmen:

- Peak-Positionsverlauf q1: Peak im reellen Sichtfenster
- Peak-Positionsverlauf q2: Peak im virtuellen Sichtfenster
- Peak-Positionsverlauf q3: Autokorrelationspeaks

Zusätzlich ist aus dem Zusammenhang von Peakposition, Autofokusposition und Breite der Blindzone bekannt, wann welcher Peak in welchem Sichtfenster zu sehen ist. Eine direkte Peak-Zuordnung, unabhängig vom Sichtfenster, ist in Figur 2e je Peak getrennt dargestellt. Hier sind die 4 Peaks P1 bis P4 entsprechend ihrer Bewegung identifiziert.

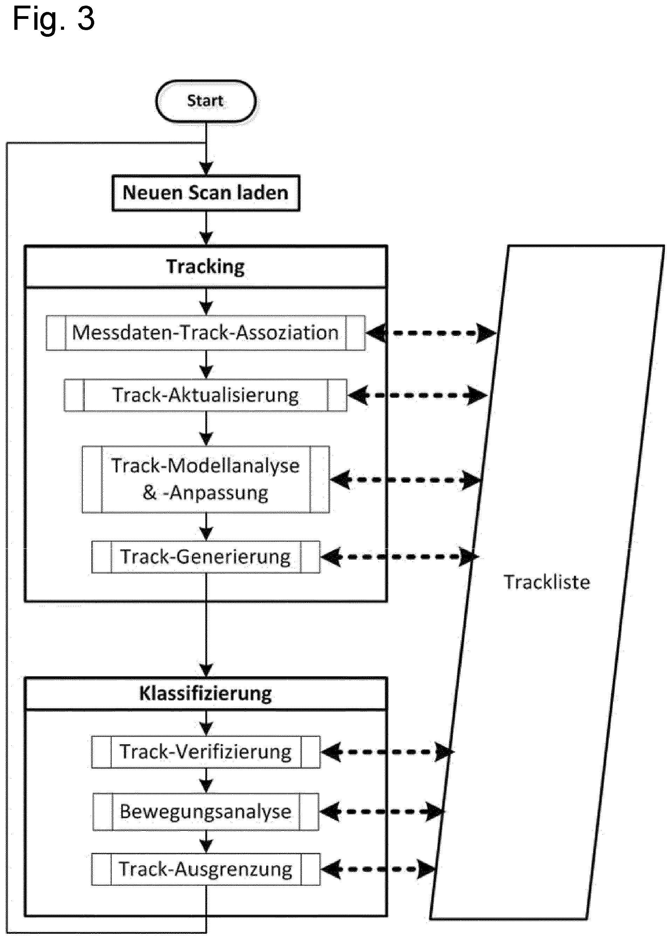

Figur 3 zeigt den wesentlichen Ablauf des Tracking-Verfahrens, wie es in der erfindungsgemäßen Vorrichtung implementiert ist und von der Auswerteeinheit ausgeführt wird. Das Verfahren umfasst die beiden Hauptmodule Tracking und Klassifizierung. In dem Modul Tracking erfolgt die Zuordnung der Messdaten bzw. Peaksignale zu einem Track oder die Generierung eines neuen Tracks. Das Hauptmodul Klassifizierung umfasst die Verifizierung der Tracks, die Bewegungsanalyse der Messdaten bzw. Peaksignale und eine Trackausgrenzung, soweit notwendig.

Tracking-Verfahren

Der echtzeitfähige Peak-Tracking-Algorithmus dient der Verfolgung mehrerer Peaks, um anhand deren Bewegungsmuster eine Peak-Typ-Klassifizierung (Reell, Virtuell, AKP) vornehmen zu können. Die Verfolgung dieser Peaks basiert auf der Positionsinformation, die für jeden Scan in Form einer Peak-Liste als Eingangsinformation zur Verfügung steht. Durch geeignete Zuordnungen von detektierten Peak-Positionen zu bereits mit Informationen bestückten Tracks können Bewegungsmodelle mit zugeordneten Messdaten aktualisiert werden, um auf deren Basis Zustands- bzw. Positionsschätzungen für den nächsten Scan zu errechnen. Diese Zustandsschätzungen dienen letztendlich dazu weitere Messwerte im Folgescan den bereits registrierten Tracks zuzuweisen und somit eine fortlaufende Track-Aktualisierung der beobachteten Peaks zu erreichen. Die wichtigste Anforderung an den Peak-Tracking-Algorithmus ist eine robuste Bewegungsverfolgung, die auch bei komplexen Situationen, wie zeitweise aussetzenden Peak-Detektionen, unterschiedlichen Formen der Peak-Überlagerung, sowie zufälligen Störeinflüssen (zufällige Peak-Bewegungen), fehlerfrei funktioniert.

Zunächst wird das Hauptmodul Tracking näher erläutert.

Ein Bestandteil ist bevorzugt das Untermodul Messdaten-Track-Assoziation. Im Tracking werden zuerst neue Messdaten den vorhandenen Tracks in der *Messdaten-Track-Assoziation* zugeordnet. Dies beinhaltet demnach die Lösung des Assoziationsproblems beim Multiple Target Tracking, bei welchem eine Gruppe von n Peaks (des aktuellen Scans) der Gruppe von m Tracks (welche zum aktuellen Zeitpunkt die Verfolgung der bisher identifizierten m Peaks darstellen) zugeordnet werden muss. Um detektierte Peaks den bereits vorhandenen Tracks zuzuordnen oder einen neuen Track aus einem nicht zugeordneten Peak zu generieren, bedarf es eines Verfahrens, das Fehlzuordnungen bestmöglich vermeidet. In komplexen Problemfällen, wie einer Peak-Überlagerung liegen mehrere Objektdetektionen gleichzeitig in mehreren Toleranzbereichen unterschiedlicher Tracks, die dann zugeordnet bzw. behandelt werden müssen.

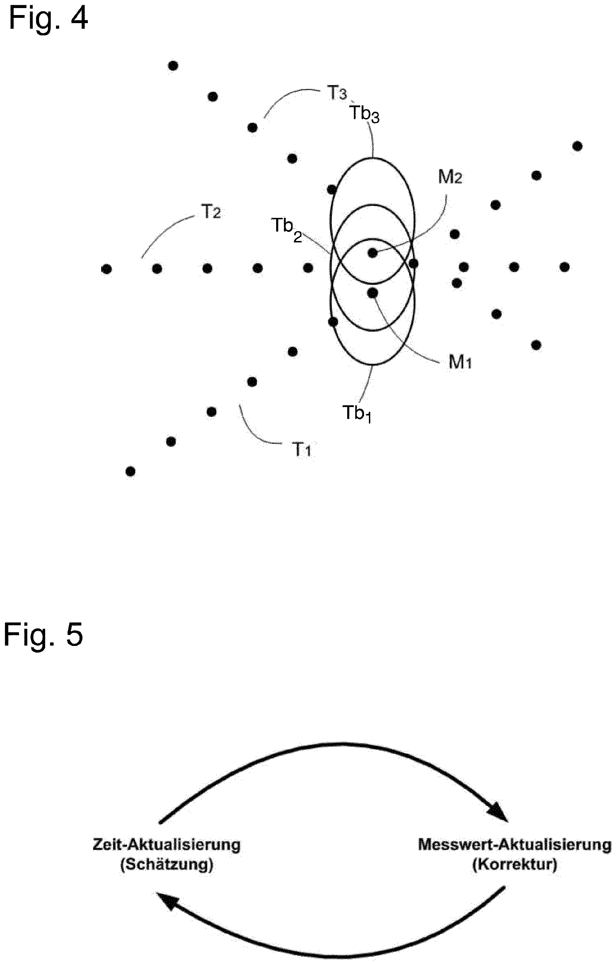

In Figur 4 ist eine Beispielsituation dargestellt, in welcher mehrere Messwerte $M_1$ und $M_2$, in mehreren Toleranzbändern der Tracks $T_1$, $T_2$ und $T_3$ liegen. In Figur 4 werden die Toleranzbereiche eines Tracks als Ellipse gezeichnet. Da die Positionsinformationen eines Peaks jedoch ausschließlich eindimensionaler Natur sind, gilt es hier zu beachten, dass das Toleranzband sich lediglich in vertikale Bereiche erstreckt. Die gezeichneten, horizontalen Begrenzungen des Toleranzbandes dienen hier nur der optischen Vereinfachung für den Betrachter, um die Messwerte eines aktuellen Scans besser einem Toleranzband zuordnen zu können.

In der Figur sind 3 Tracks gezeigt, wobei Track T1 die Messwerte links der Toleranzbänder umfasst, die von der unteren linken Ecke schräg nach oben verlaufen. Track T2 umfasst die Messwerte, die horizontal aneinandergereiht sind, während Track T3 die Reihe von Messwerten umfasst, die von der oberen linken Ecke der Figur schräg zur Mitte verlaufen. Die Messpunkte rechts der Toleranzbänder stellen die Messwerte zukünftiger Scans dar. Potentiell gibt es für die abgebildete Situation folgende mögliche Vermutungen:

Messwert $M_1$ kann Track $T_1$ oder Track $T_2$ zugeordnet werden

Messwert $M_2$ kann Track $T_1$, $T_2$ oder $T_3$ zugeordnet werden

Eine Messdaten-Track-Assoziation muss für solche Situationen entscheiden, welcher Messwert nun tatsächlich welchem Track zugeordnet wird, oder ob eine Zuordnung aufgrund der Unübersichtlichkeit durch die Objektüberlagerungen nicht durchgeführt werden kann.

Als Voraussetzung für das erfindungsgemäße Verfahren wird davon ausgegangen, dass ein Messwert nur eine mögliche Quelle haben kann: aktueller Messwert eines bereits existierenden Tracks, aktueller Messwert eines neuen Tracks oder ein nicht relevanter Messwert, der durch Rauschen erzeugt wurde. Es gilt durch die Annahme einer einzelnen Quelle (aus dem Englischen: *single source assumption*), dass jeder Messwert maximal einem einzelnen Track zugeordnet werden kann.

Zur Lösung des Assoziationsproblems werden bevorzugt im Peak-Tracking-Algorithmus harte (irreversible) Assoziationsentscheidungen getroffen, um nach jedem Scan das aktuelle, optimale Zuordnungsergebnis zu erhalten. Bevorzugt wird der *Global Nearest Neighbor (GNN) Algorithmus* zur Lösung des Assoziationsproblems genutzt. Die Implementierung des GNN-Algorithmus basiert bevorzugt auf dem als "Ungarische Methode" bekannten Verfahren. Die Ungarische Methode, ist ein Spezialfall eines linearen Optimierungsproblems, sie löst allgemein das Zuordnungsproblem zwischen zwei Gruppen unterschiedlicher Objekte, indem die Summe der Zuordnungskosten minimiert wird. Im Fall des Peak Tracking sind die Objekte der ersten Gruppe die Tracks und die Objekte der zweiten Gruppe die Peaks, die den Tracks zugeordnet werden sollen. Zuordnungskosten sind dabei der Aufwand (Abstand Peak zu Track) jeder Zuordnung eines Peaks zu einem Track.

Alternativ können auch andere GNN-Verfahren genutzt werden. So kann z.B. ein GNN mit vorhergehender Sortierung nach der Wahrscheinlichkeit der Zuordnung (Abstand vom Track) der Peak-Kandidaten in eine Trefferliste genutzt werden. Die Trefferliste wird für jeden Track anschließend so ausgewertet, dass die Peaks mit höherer Wahrscheinlichkeit zugeordnet und der Track als genutzt blockiert wird. Um falsche Zuordnungen in kritischen Situationen (z.B. Kreuzung zweier Tracks) zu vermeiden wird dies vorteilhafterweise mit eine Zuordnungspausierung kombiniert, die die Zuordnung für alle beteiligten Tracks und Peaks aussetzt, solange eine derartige Konfliktsituation besteht.

Ebenso kann man ein Verfahren mit einer einmaligen Peak-Track-Iteration einsetzen, bei dem bevorzugt zusätzlich freigegebene Tracks (wie unten als Track-Verifizierung genauer beschrieben) einen unbedingten Vorzug vor noch nicht freigegebenen Tracks erhalten und im Fall von Konflikten bevorzugt die Peaks mit höchster Zuordnungswahrscheinlichkeit reserviert werden.

Im Modul Track-Aktualisierung erfolgen für jeden Track die Zustandsaktualisierungen sowie bevorzugt die Zustandsschätzungen für den nächsten Scan auf Basis des bekannten Verfahrens, bevorzugt eines Kalman-Filters. Aufgrund der gegebenen Peak-Bewegungsmodelle wird für jeden Track ein klassisches Kalman-Filter erstellt, bei welchem die zufälligen Störbewegungen das von der Linearität abweichende, zufällige und somit nicht modellierbare Prozessrauschen darstellen. Nach dem klassischen Kalman-Filter-Prinzip wird in diesem Modul daher mit dem aus der Messdaten-Track-Assoziation zugeordneten Messwert zuerst eine Zustandsaktualisierung für den aktuellen Scan und anschließend eine Zustandsschätzung für den Folgescan durchgeführt.

Das Modul Track-Modellanalyse und -Anpassung des Hauptmoduls stellt eine Modifikation des Kalman-Filters dar. Der klassische Kalman-Filter im Peak-Tracking-Algorithmus wird durch Track-Modellanalysen erweitert, um neben den linearen Peak-Bewegungen auch nichtlineare Störbewegungen geeignet verfolgen zu können. Hierzu werden für jeden Track laufende Systemanalysen bezüglich des Mess- und Prozessrauschens durchgeführt, um die Kalman-Filterparameter eines jeden Tracks individuell anzupassen. Die verfügbaren Informationen werden letztendlich zur Veränderung der Mess- und Prozessfehlerkovarianzen, sowie der Anpassung des Track-Toleranzbandes genutzt.

Das abschließende Modul des Hauptmoduls Tracking ist die Track-Generierung, welche das Initialisieren neuer Tracks aus nicht zugeordneten Messwerten durchführt. Das initialisieren neuer Tracks beinhaltet dabei unter anderem die Initialisierung des Kalman-Filters sowie dessen Erweiterungen.

Im Folgenden wird das Hauptmodul Klassifizierung näher beschrieben, wobei zunächst auf das Modul Track-Verifizierung und anschließend auf die Module Bewegungsanalyse und Track-Ausgrenzung eingegangen wird.

Die veränderte Trackliste mit aktualisierten, sowie neu initialisierten Tracks, dient auch dem Klassifizierungs-Hauptmodul als Inputfaktor, in welchem vorerst das Modul der Track-Verifizierung angewendet wird. Die Freigabe bzw. Verifizierung eines Tracks erfolgt mit einer Verzögerung, um der schnellen Track-Generierung aus nicht zugewiesenen Peaks entgegenzuwirken. Die Verifizierungsinformation wird letztendlich bei Folgescans in der Messdaten-Track-Assoziation genutzt, um eine Kosten-Gewichtung zwischen verifizierten und nicht verifizierten Tracks zu erhalten.

Ein wesentlicher Kern der Klassifizierung von Tracks, welche einen bestimmten Peak beobachten, besteht in der Bewegungsanalyse, die für jeden Track individuell durchgeführt wird. Die Bewegungsanalyse liefert letztendlich jenes Ergebnis, welches durch das Peak-Tracking angedacht ist. Allgemein erfolgt die Bewegungsanalyse in Abhängigkeit des System- bzw. Peak-Verhaltens, d.h. Bewegungsanalysen werden in Abhängigkeit der Systemgenauigkeit (Rauschverhalten), der Störeinflüsse (Zufällige Rauschbewegung), sowie der Fokusbewegung zur Deutung des Peak-Typs vorgenommen. Aus den Zustandsgrößen eines Tracks gehen Bewegungsinformationen hervor, die letztendlich in der Bewegungsanalyse in Kombination mit den Informationen des Autofokus ausgewertet werden können. Da sich die Peaks in den beschriebenen Sichtfenstern nach einer strengen Vorschrift in Abhängigkeit der Fokusposition bewegen und die Fokusposition eine Inputgröße des Algorithmus ist, kann eine Peak-Typ-Klassifizierung vorgenommen werden, wenn die Peaks ausreichend genau auf die Veränderung des Fokus reagieren.

Ein besonderer Vorzug des vorgestellten Verfahrens besteht darin, die Bewegungsanalyse durch die gezielte Rückkopplung mit dem Autofokussystem zu unterstützen. Durch eine geeignete Nachführung der Fokusposition werden die Peakpositionen der Peaks auf der Frequenzskala gezielt beeinflusst. Da die eingestellte Fokusposition der Auswertung als Eingangsgröße zugeführt wird, kann die Peak-Klassifizierung die Bewegungsanalyse auf der Grundlage der Fokusnachstellung (Autofokussystem) und der detektierten Peakpositionen erfolgen.

Das dritte Klassifizierungsmodul umfasst die Track-Ausgrenzung bzw. die Reduzierung der Trackliste um veraltete oder nicht relevante Einträge. Die Track-Ausgrenzung erfolgt in Abhängigkeit der Track-spezifischen Zuordnungskontinuität.

Im Folgenden wird anhand der Beschreibung eines Beispiels die Durchführung einer Erkennung eines Objekts und seiner Grenzschichten erläutert.

Zur Ermittlung der Peak-Kandidaten werden bevorzugt die Messdaten aufgenommen und aus den ein-dimensionalen Werteketten die potentiellen Peaks ermittelt. Zur Messdaten-Track-Assoziation wird vorteilhafter Weise ein GNN-Algorithmus (Global Nearest Neighbour) nach Ungarischer Methode eingesetzt. Dieser ermittelt die Zuordnung der Tracks zu den Peaks mittels einer globalen Minimierung der Zuordnungskosten. Somit wird ein Zuordnungsergebnis derart ermittelt, dass einem Track nicht zwangsläufig der lokal wahrscheinlichste Peak zugewiesen wird. Vielmehr wird bevorzugt in Abhängigkeit der Peak- und Track-Konstellation für alle Kombinationen eine tatsächlich global optimale Lösung gefunden, ohne dabei eine Zuordnung auszulassen. Jeder Peak wird auf das Toleranzband eines jeden Tracks überprüft, und falls er innerhalb des Toleranzbandes liegt, werden bevorzugt die Zuordnungskosten (Abstand Peak-Ist-Position zu Peak-Schätzung = erwartete Position) in eine Matrix eingetragen. Die Matrix kann nach Track (Zeilen) und Peaks (Spalten) indiziert sein. Liegt der Peak außerhalb des Toleranzbandes eines Tracks, wird bevorzugt unendlich als Matrixeintrag gewählt.

Die resultierende Zuordnungsmatrix der Größe $n \times n$, mit n = Anzahl der Peaks bzw. Tracks, wird beispielsweise entsprechend dem aus der Literatur als "Ungarische Methode" bekannten Verfahren ausgewertet. Dieses Verfahren liefert die optimale Zuordnung der Peaks zu den Tracks derart, dass die gesamten Zuordnungskosten minimiert werden.

Um bei der Bildung neuer Tracks aus nicht zugeordneten Peaks zu gewährleisten, dass noch nicht freigegebene Tracks mit niedrigerer Priorität bedient werden, wird bevorzugt den Zuordnungskosten bei nicht freigegebenen Tracks ein Offset in Form des Maximums aller Track-Toleranzbänder addiert.

Zur Track-Aktualisierung wird bevorzugt zunächst eine Zustandsaktualisierung des aktuellen Scans ausgeführt und anschließend die Zustandsschätzung für den nächsten Scan ausgeführt. Die Werte für Aktualisierung und Schätzung werden mit einem Kalman-Filter ermittelt, der den Zustand des beobachteten Peak-Bewegungsprozesses schätzt, während der mittlere quadratische Schätzfehler minimiert wird. Es löst das inverse Problem einer ausgeführten Messung, anhand der vom Sensor gelieferten Messdaten auf die tatsächlichen Zufallsgrößen zu schließen, unter der Annahme, dass die vom Sensor gelieferten Messdaten einer Rauschstörung unterliegen und daher nicht exakt den Zufallsgrößen entsprechen, welche mit dem System beobachtet werden sollen.

Es wird der Systemzustand $x_k \in \Re^n$ eines zeitdiskreten Prozesses geschätzt, welcher durch eine lineare, stochastische Differenzengleichung, die Zustandsgleichung (1), und die Messung $z_k \in \Re^m$, die Beobachtungsgleichung (2), beschrieben werden kann.

$$x_k = A \cdot x_{k-1} + B \cdot u_{k-1} + w_{k-1} \tag{1}$$

$$z_k = H \cdot x_k + v_k \tag{2}$$

Beide Gleichungen bilden das Zustandsraummodell mit den zufälligen Variablen $w_k$ und $v_k$ welche das durch die Wahrscheinlichkeitsverteilungen (3) und (4) charakterisierte Prozessrauschen und Messrauschen repräsentieren. Das Prozessrauschen ist die Störung im definierten System. Es entspricht der Abweichung des definierten Bewegungsmodells in der Matrix A gegenüber dem tatsächlichen Bewegungsmodell.

$$p(w) \sim N(0, Q) \tag{3}$$

$$p(v) \sim N(0, R) \tag{4}$$

$Q$ und $R$ sind hier die Kovarianzen des Prozessrauschens und des Messrauschens, mit den Dimensionen $n \times n$ und $m \times n$. Die Kovarianz wird als eine Kenngröße für die Stärke des linearen Zusammenhangs zweier quantitativer Zufallsvariablen verstanden.

Die Systemmatrix $A$ der Größe $n \times n$ beschreibt die System-Dynamik, also die Verknüpfung zwischen dem Prozesszustand zum Zeitpunkt $k$ - 1 und dem aktuellen Zeitpunkt k basierend auf einem fest vorgegeben Bewegungsmodell. Die Matrix $B$ ist der äußere Einfluss, welcher den Steuerungsinput $u$ zum Prozesszustand $x$ verknüpft. $H$ beschreibt die Beobachtungsmatrix der Größe $m \times n$, die den aktuellen Zustand $x_k$ mit der Messung $z_k$ verknüpft.

Die mit dem Kalman-Filter zu lösende Aufgabe beschränkt sich, unter der Annahme der Einhaltung der Linearität des Systemmodells und der über der Zeit anhaltenden Eigenschaft einer gaußförmigen Rauschbelastung von $w_k$ und $v_k$, auf die Schätzung des Mittelwertes $\hat{x}_k$ und der Kovarianz $P_k$ des Systemzustands. Die Teilprozesse des Kalman-Filters, können in eine Zustands-Prädiktion und eine Zustands-Korrektur gruppiert werden. Für die Hintergründe der Wahrscheinlichkeitstheorie und die rechentechnische Herleitung der Kalman-Gleichungen sei auf die bekannte Literatur verwiesen.

Im Prädiktions-Teilprozess, auch Zeit-Aktualisierung genannt, wird eine A-Priori-Schätzung der Größen $\hat{x}_k$ und $P_k$ durchgeführt, die den aktuellen Zustand und die Fehlerkovarianz auf den nächsten Zeitschritt extrapoliert:

$$\hat{x}_{k\,apriori} = A \cdot \hat{x}_{k-1} \tag{5}$$

$$P_{k\,apriori} = A \cdot P_{k-1} \cdot A^T + Q \tag{6}$$

Die Zustandsschätzung beruht ausschließlich auf dem Zustand des vorherigen Scans $k$ - 1, welcher durch das zeitdiskrete modellierte System in $A$ auf den nächsten Scan zum Zeitpunkt $k$ abgebildet wird (Formel (5)). Die Schätz-fehlerkovarianz $P_k$ macht eine Aussage darüber, wie sehr der zugrunde liegenden Schätzung vertraut werden kann. Um die Unsicherheit der Zustandsschätzung abzubilden, wird die Schätzfehlerkovarianz des vorherigen Zeitpunktes durch das Systemmodell $A$ vergrößert (Formel (6)). Über die Prozesskovarianz-Matrix $Q$ kann eine zusätzliche Unsicherheit in die Schätzung eingepflegt werden, wenn das genutzte Systemmodell in $A$ von dem tatsächlichen Systemmodell abweicht.

Im Korrektur-Teilprozess, auch Messwert-Aktualisierung genannt, wird der A-priori-Zustand und die A-Priori-Fehlerkovarianz durch den Einfluss eines Messwertes korrigiert und somit eine verbesserte A-Posteriori-Schätzung des Zustands erreicht.

$$K_k = P_{k\,apriori} \cdot H^T \cdot (H \cdot P_{k\,apriori} \cdot H^T + R)^{-1} \tag{7}$$

$$\hat{x}_{k\,aposteriori} = \hat{x}_{k\,apriori} + K_k \cdot (z_k - H \cdot \hat{x}_{k\,apriori}) \tag{8}$$

$$P_{k\,aposteriori} = P_{k\,apriori} - K_k \cdot H \cdot P_{k\,apriori} \tag{9}$$

Als erster Schritt wird hierzu die so genannte Kalman-Verstärkung $K_k$ mittels Formel (7) berechnet. Sie minimiert die im Prädiktions-Teilprozess vergrößerte Fehlerkovarianz $P_k$ mithilfe der Messfehlerkovarianz $R$. Im zweiten Schritt (Formel (8)) erfolgt die Verknüpfung des A-Priori-Zustands-Schätzwertes mit dem Einfluss des Messwertes $z_k$. Die Formulierung $z_k - H \cdot \hat{x}_{k_{apriori}}$ wird dabei als Innovation, oder auch Residuum bezeichnet. Sie reflektiert die Abweichung zwischen dem geschätzten Messwert $H \cdot \hat{x}_{k_{apriori}}$ und dem tatsächlichen Messwert $z_k$. Die Größe von $K_k$ bestimmt die Verstärkung der Abweichung, die ihrerseits den geschätzten Zustand $\hat{x}_{k_{apriori}}$ korrigiert. Der dritte Schritt (Formel (9)) ist die Minimierung der Schätzfehler-Kovarianz $P_k$, die ebenfalls in Abhängigkeit der Kalman-Verstärkung durchgeführt wird.

Wird die Kalman-Verstärkung in nachfolgender Form betrachtet,

$$K_k = \frac{P_{k_{apriori}} \cdot H^T}{H \cdot P_{k_{apriori}} \cdot H^T + R} \tag{10}$$

Ergeben sich folgende Schlussfolgerungen für das Verhalten des Filters:

1. Wird die Varianz des Messrauschens in $R$ als sehr gering definiert, so lässt sich annehmen, dass die empfangenen Messwerte eine hohe Genauigkeit haben. Für $\lim\limits_{R \to 0} K_k = H^{-1}$ gilt, dass die Kalman-Verstärkung die Innovation sehr stark gewichtet. Mit anderen Worten wird wenig Vertrauen in die Schätzung gelegt und auf die Exaktheit der Messwerte gezählt.

2. Strebt die Schätzfehlerkovarianz $P_k$ gegen null, gewichtet die Kalman-Verstärkung die Innovation schwach. Für $\lim\limits_{P_{k_{apriori}} \to 0} K_k = 0$ gilt, dass das Vertrauen sehr stark auf der A-Priori-Schätzung des Zustandes liegt.

3. Für große $K_k$ hat die Innovation in Formel (8) einen starken Korrektureinfluss auf die A-Priori-Schätzung des Zustands, die Korrektur fällt stark aus.

4. Für große $K_k$ wird die Schätzfehlerkovarianz $P_k$ in Formel (9) stärker minimiert, da die große Verstärkung ein hohes Vertrauen des Messwertes bedeutet.

Um zu verhindern, dass ein eingeschwungenes System zu stark auf die A-Priori-Schätzung des Zustandes vertraut (siehe Punkt 2) und das Kalman-Filter dem tatsächlichen Zustand nicht mehr schnell genug folgen kann, wird bevorzugt die Prozesskovarianz-Matrix Q genutzt. Mit Q wird in jedem Prädiktions-Teilprozess ein definiertes Maß an Unsicherheit zu der Kovarianz des Schätzfehlers hinzufügt und somit das Einpendeln der Komponenten der Schätzfehlerkovarianz $P_k$ auf einen geringen Wert einschränkt

Figur 5 zeigt, dass nach jeder Zeit- und Messwert-Aktualisierung der Kalman-Prozess mit den A-Posteriori-Ergebnissen des vorherigen Scans wiederholt wird. Dieser rekursive Ansatz ermöglicht es, die aktuellen Schätzungen durch alle vergangenen Messwerte zu bestimmen, ohne die Gesamtheit der vergangenen Messwerte bei jeder Schätzung neu zu betrachten.

Als Systemmodell A können für die vorliegende Aufgabe vorteilhafterweise zwei verschiedene Modelle genutzt werden. Sie basieren alternativ auf konstanter Geschwindigkeit der Peak-Bewegung oder konstanter Beschleunigung. Der Ansatz mit konstanter Beschleunigung der Peak-Bewegung ist dabei besonders vorteilhaft, da er ermöglicht, die Dynamik des Prozesses besser zu bewerten und somit deutlich präzisere Zustandsschätzungen, insbesondere bei Störungen, zu erreichen.

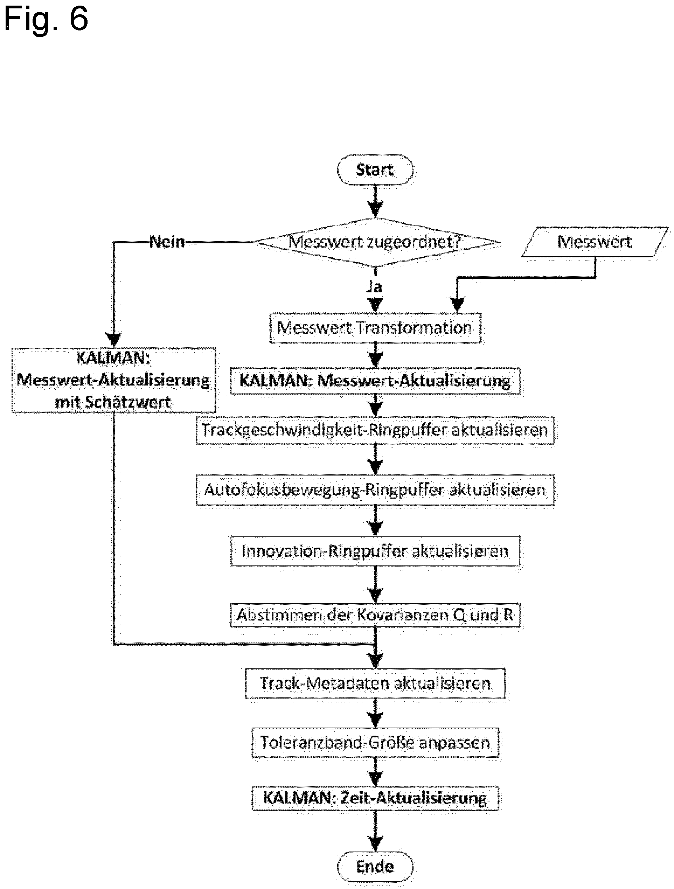

Der Ablauf von Zustandsaktualisierung und Zustandsprädikation ist in Figur 6 gezeigt.

Wurde einem Track ein Peak in der Messdaten-Track-Assoziation zugewiesen, so erfolgt bevorzugt nach der Messwert-Transformation (analog zur Messwert-Transformation beim Mean-Movement-Filter) die Kalman Messwert-Aktualisierung nach den Gleichungen (7), (8) und (9).

Anschließend werden Ringpuffer (gleitende Mittelwertbildung zur Reduktion des Rauscheinflusses) für die Bewegungs- und Systemanalyse aktualisiert. In einem Innovation-Ringpuffer werden zusätzlich zum gleitenden Mittelwert die gleitende Varianz bzw. der gleitenden Standardabweichung berechnet.

Mit den Aktualisierungen des Innovations-Mittelwerts, sowie der Innovations-Standardabweichung in den zeitdiskreten Beobachtungsbereichen erfolgt die laufende Systemanalyse des Mess- und Prozessrauschens. Die verfügbaren Informationen werden dann zur Veränderung der Mess- und Prozessfehlerkovarianzen genutzt. Im nächsten Prozessschritt werden alle benötigten Track-Metadaten für die Klassifizierung eines Tracks aktualisiert.

Eine weitere Optimierung des Tracking-Systems erfolgt im nachfolgenden Prozessschritt der Track-Toleranzbandanpassung in Abhängigkeit der gleitenden Standardabweichung. Der letzte Prozessschritt der Zustandsaktualisierung ist die Zustandsschätzung des Tracks für den nächsten Zeitschritt mittels Kalman Zeit-Aktualisierung.

Falls ein Track in der Messdaten-Track-Assoziation keinen Messwert zugewiesen bekam, so wird bevorzugt die Aktualisierung der Ringpuffer ausgesetzt und eine Kalman Messwert-Aktualisierung mit dem in der vorherigen Kalman Zeit-Aktualisierung geschätzten Track-Positionswert durchgeführt.

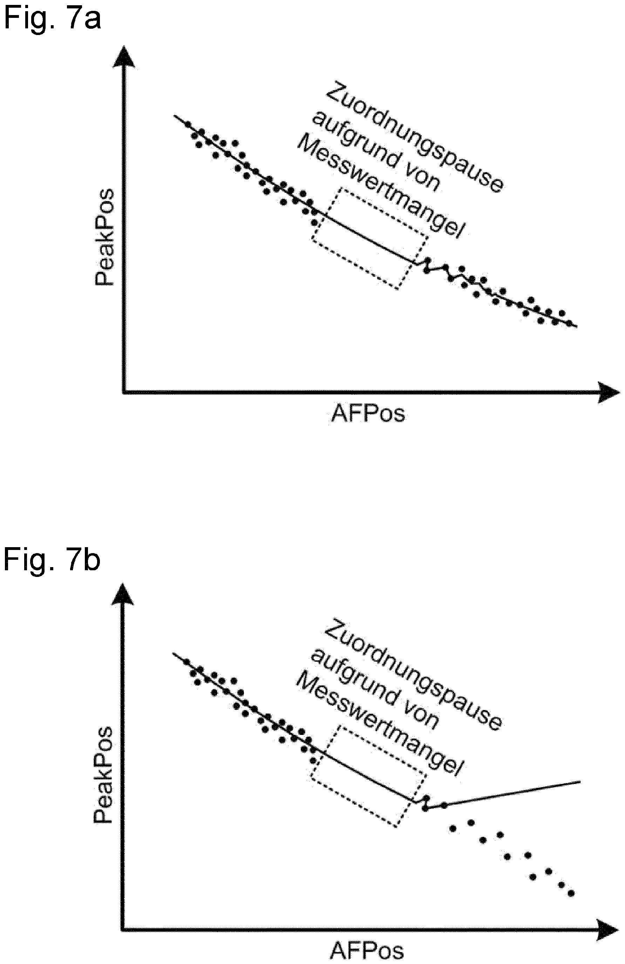

Würde diese Aktualisierung nicht durchgeführt, so vergrößerte sich die Schätz-fehler-Kovarianz in Formel (6) mit jeder Zuordnungspause. Dies kann unter Umständen bei verrauschten Messdaten zu einem enorm großen Vertrauen in den Messwert und dadurch zu einer hohen Empfindlichkeit gegenüber dem Messrauschen führen. Eine zu starke Empfindlichkeit gegenüber Messrauschen resultiert letztendlich in hohen Track-Dynamiken, welche ggf. zu einem Track-Verlust führen können. Die Figuren 7a und 7b stellen einen Track bei einer schwachen (Figur 7a) und bei einer starken (Figur 7b) Rauschempfindlichkeit dar.

Um zu hohe Track-Dynamiken zu verhindern, wird in Zuordnungspausen das Vertrauen in die Zustandsschätzung durch die Messwert-Aktualisierung mittels des Schätzwerts verstärkt, um solche abrupten Dynamikänderungen nach einer längeren Zuordnungspause durch hohe Schätzfehler-Kovarianzen zu vermeiden.

Im Rahmen der Erfindung wurde erkannt, dass eine Herausforderung im Rahmen des Peak-Tracking in der Veränderlichkeit des Messrauschens und des Prozessrauschens liegt. Das Rauschen (Messrauschen sowie Prozessrauschen) kann im Verlauf der Beobachtung von einem vorerst als konstant angenommenen Zustand abweichen. Dies kann beispielsweise aufgrund der Peak-Kreuzungsstellen erfolgen, wo sich das Messrauschen des Sensors nicht nur an dessen tatsächlicher Genauigkeit misst. Durch die zeitdiskrete Beobachtungsbereich-Analyse eines beobachteten Peaks wird das klassische Kalman-Filter durch eine gleitende Parameteroptimierung erweitert. Änderungen des Messrauschens und des Prozessrauschens können so im Verlauf eines Tracks berücksichtigt werden. Hierzu werden bevorzugt folgende Initialisierungen bei der Track-Generierung vorgenommen:

1. Der geschätzte zukünftige Systemzustand bei der Track-Generierung erfolgt ohne Annahme einer Geschwindigkeit oder Beschleunigung.

2. Initial wird eine hohe Schätzfehlerkovarianz der Form $\begin{vmatrix} 1000 & 1 & 0 \\ 1 & 0 & 0 \\ 0 & 0 & 0 \end{vmatrix} \cdot \sigma$ für den neuen Track gesetzt mit einem großen Gewichtungsfaktor $\sigma$. Der hohe initiale Schätzfehler implementiert den Umstand, dass der Track noch keinerlei Informationen zur Bewegung gesammelt hat und die Startschätzung somit zwangsläufig ungenau ist. Die Kovarianz für die Position wird deutlich größer (Faktor 1000) als die Kovarianz für die Geschwindigkeit gewählt. Dies führt in der Anfangsphase eines Tracks zu einer schnellen Positionskorrektur, jedoch zu einer mäßigen Geschwindigkeitskorrektur. Dies vermeidet extrem frühe Track-Verluste durch zu hohe Dynamiken in der Track-Bewegung. Es ermöglicht jedoch gleichzeitig jede Messpunkt-Korrektur in der Initialphase aufzufangen. Entsprechend wird bevorzugt auch die Schätzfehlerkovarianz der Beschleunigung minimal gewählt.

3. Die Messfehler-Kovarianz wird in der Anfangsphase eines Tracks so hoch gewählt, dass sie akzeptable Ergebnisse in der Initialphase eines Tracks sicherstellt.

4. Die Komponenten der Prozessfehlerkovarianz betragen initial den Wert null, da davon ausgegangen wird, dass sich die Dynamik der Peak-Bewegung in der Initialphase nicht zu stark ändert, d.h. es gilt vorerst die Annahme eines perfekten Bewegungsmodells.

Für eine vorteilhafte Abschätzung der Messfehler- und Prozessfehler-Kovarianz wird bevorzugt eine laufende Systemanalyse durchgeführt, welche die ständig aktualisierten Beobachtungsbereiche des Innovation-Ringpuffers nutzt, um eine Abschätzung über das Messrauschen und das Prozessrauschen zu gewinnen.

Unter der Annahme, dass sich ein Track annähernd ideal auf der tatsächlichen Bahn des Peaks bewegt, können aus den Daten des Innovation-Ringpuffers bevorzugt folgende Informationen gewonnen werden:

1. Die gleitende Standardabweichung im betrachteten Beobachtungsbereich macht eine Aussage über das Messrauschen, welches den aktuell beobachteten Peak belastet. Je höher die gleitende Standardabweichung der Innovation, desto höher ist das Messrauschen.

2. Der gleitende Mittelwert im betrachteten Beobachtungsbereich macht eine Aussage über das Prozessrauschen beim aktuell beobachteten Peak. Je höher der gleitende Mittelwert der Innovation wird, desto stärker scheint die aktuelle Track-Dynamik von der tatsächlichen Peak-Dynamik abzuweichen. Verläuft ein Track unter Annahme eines bekannten Messrauschens nahezu ideal auf der tatsächlichen Bahn eines Peaks, kompensiert sich das normalverteilte Messrauschen zu einem sehr kleinen Mittelwert.

Diese Informationen und die genannten Rückschlüsse werden letztes Endes für die Abstimmung der Messfehler- und Prozessfehlerkovarianz genutzt.

Die Messfehlerkovarianz wird bevorzugt auf den Wert der 3a-Umgebung der statistischen Werte des Innovation-Ringpuffers gesetzt, um 99,7% aller auftretenden Messwerte im untersuchten Beobachtungsbereich zu berücksichtigen. Bevorzugt wird gleichzeitig die Messfehlerkovarianz mit einem Mindestwert versehen, damit das Tracking-System z.B. bei kurzzeitigen, stärkeren Rauschstörungen nicht zu sensibel reagiert.

Zur Bestimmung der Prozessfehlerkovarianz wird dieselbe erhöht, sobald sich die Dynamik des beobachteten Objekts schnell verändert. Ebenso wird diese entsprechend reduziert, wenn sich die Dynamik langsamer verändert. Die Prozessfehlerkovarianz wird so genutzt, um die Unsicherheit im Bewegungsmodell auszugleichen. Der Inhalt der Prozessfehler-Kovarianzmatrix Q geht davon aus, dass durch Prozessrauschen generierte Beschleunigungen für aufeinanderfolgende Zeitschritte konstant sind. Das genutzte Modell nimmt dabei die Form (11), das sogenannte diskrete Wiener Prozess-Beschleunigungsmodell (Englisch: Discrete Wiener Process Acceleration Model, kurz DWPA), an.

$$Q = \begin{vmatrix} \frac{1}{4}T^4 & \frac{1}{2}T^3 & \frac{1}{2}T^2 \\ \frac{1}{2}T^3 & T^2 & T \\ \frac{1}{2}T^2 & T & 1 \end{vmatrix} \cdot \sigma^2 \qquad (11)$$

$\sigma^2$ ist ein Faktor, mit dem der Einfluss der Prozessfehler-Kovarianz in den Tracking-Prozess reguliert werden kann. Hierbei wird mit steigender Abweichung zwischen modellierter und tatsächlicher Systemdynamik der Faktor $\sigma^2$ vergrößert und bei sinkender Abweichung wieder verkleinert. Die Variation von $\sigma^2$ ist demnach abhängig vom gleitenden Mittelwert der Innovation, welcher auf die Diskrepanz zwischen tatsächlicher und modellierter Dynamik hinweist. Je stärker somit die Abweichung zur tatsächlichen Dynamik, desto größer die Komponenten der Prozessfehler-Kovarianz und letztendlich desto geringer das Vertrauen in die Schätzung des Kalman-Filters.

Die gleitende Standardabweichung wird weiterhin für die Toleranzbandanpassung der Tracks bevorzugt nach folgendem Regelwerk genutzt:

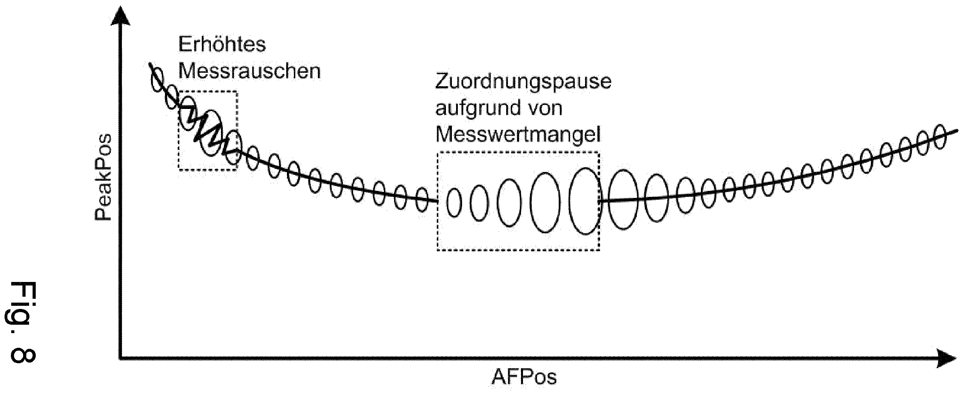

1. Liegt die dreifache Standardabweichung, addiert mit der fest definierten Mindestgröße eines Toleranzbandes, unter der aktuellen Toleranzbandgröße, so wird diese um einen kleinen Anteil verringert. Liegt sie über der aktuellen Toleranzbandgröße, so wird diese um einen kleinen Anteil vergrößert. Diese Regel ist in Figur 8 um den Bereich des erhöhten Messrauschens (im Anfangsbereich des Tracks) zu beobachten.

2. Wird einem Track kein Messwert in der Messdaten-Track-Assoziation zugewiesen, so wird sein Toleranzband bevorzugt vorsorglich um einen kleinen Anteil vergrößert, um mögliche Fehlschätzungen durch erhöhte Toleranzbereiche auszugleichen. Diese Regel ist in Figur 8 im und nach dem mittleren markierten Bereich zu beobachten.

3. Das Toleranzband kann bevorzugt nicht kleiner und nicht größer als die fest definierten Minimal- und Maximal-Schwellwerte werden.

Mit dieser Arbeitsweise kann die Toleranzbandanpassung auf Verkleinerung, durch eine geringere Standardabweichung, als auch auf Vergrößerung, durch eine zunehmend höhere Standardabweichung, gleichermaßen reagieren.

Im Folgenden werden verschiedene Track-Verifizierungen betrachtet:

Track-Verifizierung: Freigabe eines Tracks

Ein Track gilt genau dann als verifiziert, wenn er eine Mindestanzahl an Peak-Zuordnungen erhalten hat. Die Freigabe eines Tracks erfolgt mit dieser Verzögerung, um der schnellen Track-Generierung aus nicht zugewiesenen Peaks entgegenzuwirken.

Track-Verifizierung: Bewegungsanalyse

Das erste Modul der Klassifizierung ist die Bewegungsanalyse, die benötigt wird um ein Tracking im Sichtfenster bei unbekanntem Peak-Typ in ein Absolutes Tracking zu transformieren.

Grundsätzlich leitet sich die Bewegungsanalyse aus den Eigenschaften der Peak-Bewegung in Abhängigkeit der Autofokusbewegung ab. Um die realen Abweichungen vom Idealzustand zu bewerten, werden für die Bewegungscharakterisierungen Toleranzbereiche für die unterschiedlichen Peak-Typen genutzt. Als vorteilhaft hat sich dabei erwiesen, die Bewegungstoleranz aus der gemittelten Geschwindigkeit des Autofokus nach:

$$Bewegungstoleranz = \frac{|Autofokusgeschwindigkeit_{gemittelt}|}{4} \qquad (12)$$

zu ermitteln. Ein Track gilt bevorzugt als klassifiziert, wenn dessen Geschwindigkeit innerhalb der Bewegungstoleranz aus Formel (12) liegt. Andernfalls wird die Klassifizierung so lange ausgesetzt, bis die Bewegung des Tracks eindeutig einem Toleranzbereich zuzuordnen ist.

Die Bewegungsanalyse wird daher ausgeführt nach:

- |Trackgeschwindigkeit| < Bewegungstoleranz
  Bewegungsmuster deutet auf einen AKP hin
- |Trackgeschwindigkeit| - |Autofokusgeschwindigkeit| < Bewegungstoleranz

  ○ |Trackgeschwindigkeit| ≈ (-1)* Autofokusgeschwindigkeit:
  Bewegungsmuster deutet auf einen reellen Peak hin

  ○ |Trackgeschwindigkeit| ≈ Autofokusgeschwindigkeit:
  Bewegungsmuster deutet auf einen virtuellen Peak hin

Track-Verifizierung: Ausgrenzung eines Tracks

Das zweite Klassifizierungsmodul umfasst die Track-Ausgrenzung bzw. die Reduzierung der Trackliste um veraltete oder nicht relevante Einträge. Ein Track gilt dann als veraltet oder nicht relevant, wenn er für eine bestimmte Distanz der Autofokusbewegung oder eine bestimmte Distanz des Tracks im Sichtfenster keine hinreichende Zuordnungskontinuität erfährt. Um dem rapiden Generieren von Tracks durch Messwert-Ausreißer entgegenzuwirken, werden zusätzlich jene Tracks als nicht relevant eingestuft, die in der Initialphase, zeitlich betrachtet, eine schwache Zuordnungskontinuität haben.

Mit den Informationen der Track-Daten werden Tracks nach den folgenden drei Kriterien eliminiert:
Ein Track wird bevorzugt aus der Trackliste gelöscht, wenn

1. in weniger als 50% der vergangenen Zeitschritten eine Messwertzuordnung erfolgte. Dieses Kriterium wird ausschließlich auf initiale Tracks angewendet und entfällt für bereits freigegebene Tracks.

2. er eine Strecke im Sichtfenster zurückgelegt hat, die länger als die fest vorgegebene Maximaldistanz ist und dem Track dabei kein Messwert zugewiesen wurde.

3. der Autofokus eine Strecke zurückgelegt hat, die länger als die fest vorgegebene Maximaldistanz ist und dem Track dabei kein Messwert zugewiesen wurde.

Die Berücksichtigung der zurückgelegten Distanzen in der Blindzone ist an dieser Stelle besonders wichtig, damit ein Track nicht frühzeitig aus der Trackliste entfernt wird, weil er in der Blindzone keine Messwert-Zuordnung erfahren kann. Die fest vorzugebende Maximaldistanz, in welcher die Zuordnungskontinuität einbrechen darf, kann bevorzugt vorab anhand von Testmessungen empirisch ermittelt werden.

## Patentansprüche

1. Vorrichtung zur Inspektion von flachen Objekten und zum Erfassen von Grenzschichten (g1, g2) dieser Objekte, mit:

   einem optischen Messsystem nach dem Verfahren der spektralen Interferenz (SCI) zur Messung von Abständen mit einem Sensor (1), wobei das Messsystem Peak-Signale liefert, deren Position in einem ein-dimensionalen Signalraum dem Abstand zwischen dem Sensor und einer Grenzschicht oder zwischen Grenzschichten entspricht;
   einer Auswerteeinheit, die dazu ausgebildet ist, in einem Trackingprozess die Peak-Signale auszuwerten und einem Peak-Signal einen vorgegebenen Peaktyp zuzuweisen;
   wobei
   die Auswerteeinheit in einer Messung erfasste Peak-Signale verschiedenen Tracks (T1, T2, T3) zuordnet;
   Tracks jeweils mit dem zugeordneten neuen Peak-Signal aktualisiert werden;
   die Zuordnung eines Peak-Signals zu einem Track auf der Position oder der Änderung der Position des Peak-Signals in dem ein-dimensionalen Signalraum basiert;
alle Peak-Signale eines Tracks dem gleichen Peaktyp zugewiesen sind; und
die Änderung eines Peak-Signals für die nächste Messung mittels eines Schätzers geschätzt wird.

2. Vorrichtung nach Anspruch 1, **dadurch gekennzeichnet, dass** der Trackingprozess wenigstens zwei der folgenden Prozessschritte umfasst:

Zuordnen eines erfassten Peak-Signals zu einem Track;
Aktualisierung eines bestehenden Tracks mit den Peak-Signalen der aktuellen Messung;
Anpassung der Eigenschaften des Schätzers basierend auf einem Analysieren der Messung und des Rauschens des Prozesses;
Erzeugung eines neuen Tracks basierend auf nicht zuordenbaren Peak-Signalen.

3. Vorrichtung nach Anspruch 1 oder 2, **dadurch gekennzeichnet, dass** die Auswerteeinheit ausgebildet ist, um eine Track-Klassifizierung auszuführen, die bevorzugt wenigstens zwei der folgenden Klassifizierungsmodule umfasst:

Verifizierung eines Tracks als Messreihe erfasster Peak-Signale und/oder Verifizierung nicht zuordenbarer Peak-Signale als Ausgangspunkt eines neuen Tracks;
Analysierung der Änderung der Position eines Peak-Signals, bevorzugt durch Analysierung der Bewegung des Peak-Signals, und Zuordnung des Peak-Signals zu einem der Peaktypen auf Basis der Analyse;
Ausgrenzung eines Tracks und bevorzugt Löschen eines Tracks in Abhängigkeit eines Kontinuitätskriteriums.

4. Vorrichtung nach einem der vorhergehenden Ansprüche, **dadurch gekennzeichnet, dass** der Trackingprozess zur Zuordnung eines erfassten Peak-Signals zu einem Track durch den gezielten Einsatz einer Abstandsregulierung (AF) zwischen Sensor und Messobjekt die Peakposition unmittelbar beeinflusst und die daraus resultierende Peakpositionsveränderung für die Zuordnung zu einem Track benutzt

5. Vorrichtung nach einem der vorhergehenden Ansprüche, **dadurch gekennzeichnet, dass** der Trackingprozess zur Zuordnung eines erfassten Peak-Signals zu einem Track einen Global-Nearest-Neighbour-Algorithmus umfasst, der bevorzugt nach der "Ungarischen Methode" implementiert ist.

6. Vorrichtung nach einem der vorhergehenden Ansprüche, **dadurch gekennzeichnet, dass** der Schätzer ein Kalman-Filter ist.

7. Vorrichtung nach Anspruch 6, **dadurch gekennzeichnet, dass** der Kalman-Filter ein Systemmodell umfasst, das auf einer konstanten Geschwindigkeit der Peak-Signale basiert.

8. Vorrichtung nach Anspruch 6, **dadurch gekennzeichnet, dass** der Kalman-Filter ein Systemmodell umfasst, das auf einer konstanten Beschleunigung der Peak-Signale basiert.

9. Vorrichtung nach einem der Ansprüche 6 bis 8, **dadurch gekennzeichnet, dass** in dem Kalman-Filter eine Prozess-Kovarianz verwendet wird, um den Einfluss einer A-Priori-Schätzung auf den Systemzustand der Vorrichtung zu begrenzen.

10. Vorrichtung nach Anspruch 9, **dadurch gekennzeichnet, dass** die Prozess-Kovarianz verwendet wird, um die Kovarianz eines Schätzfehlers zu erhöhen und den Einfluss der A-Priori-Schätzung auf den Systemzustand der Vorrichtung zu begrenzen.

11. Vorrichtung nach einem der Ansprüche 6 bis 10, **dadurch gekennzeichnet, dass** das Kalman-Filter für eine Zeitaktualisierung und Schätzung und für eine Messwertaktualisierung und Korrektur in dem Trackingprozess verwendet wird und bevorzugt nach jeder der Aktualisierungen das Kalman-Filter mit den A-Posteriori-Ergebnissen der vorherigen Messung verwendet wird.

12. Vorrichtung nach einem der Ansprüche 6 bis 11, **dadurch gekennzeichnet, dass** der Einfluss eines Rauschens der Vorrichtung auf den Trackingprozess durch Bildung eines gleitenden Mittelwerts der erfassten Peak-Signale über eine vorgegebene Anzahl von Messungen reduziert wird.

13. Vorrichtung nach dem vorhergehenden Anspruch, **dadurch gekennzeichnet, dass** die Vorrichtung einen Ringpuffer umfasst und der Ringpuffer zur Bestimmung des gleitenden Mittelwerts verwendet wird.

14. Vorrichtung nach einem der Ansprüche 6 bis 13, **dadurch gekennzeichnet, dass** die Zuordnung eines Peak-Signals zu einem Track auf einem Toleranzband oder Toleranzbereich für die Position des Peak-Signals zu dem Track basiert und das Toleranzband oder der Toleranzbereich bevorzugt abhängig von der gleitenden Standardabweichung der Position des Peak-Signals zu dem Track ermittelt wird.

15. Vorrichtung nach einem der vorhergehenden Ansprüche, **dadurch gekennzeichnet, dass** die Nutzung eines Tracks für eine Verfolgung von Peak-Signalen freigegeben wird, bevorzugt gemäß einer Track-Klassifizierung nach Anspruch 3, wenn der Track eine vorgegebene Anzahl von Zuordnungen von Peak-Signalen zu dem Track aufweist.

16. Verfahren zur Inspektion von flachen Objekten und zum Erfassen von Grenzschichten (g1, g2) dieser Objekte nach der Methode der spektralen Interferenz (SCI), mit den folgenden Schritten:

   Messung von Abständen mittels eines Sensors (1) eines Messsystems;
   Erzeugen von Peak-Signalen, deren Position in einem ein-dimensionalen Signalraum dem Abstand zwischen dem Sensor und einer Grenzschicht oder zwischen Grenzschichten entspricht;
   Auswerten der erfassten Peak-Signale in einem Trackingprozess;
   Zuweisen eines Peak-Signals zu einem vorgegebenen Peaktyp;
   Zuordnen der in einer Messung erfassten Peak-Signale zu unterschiedlichen Tracks (T1, T2, T3), wobei alle Peak-Signale eines Tracks dem gleichen Peaktyp zugewiesen sind;
   Aktualisieren des Tracks mit dem neuen zugeordneten Peak-Signal; wobei die Zuordnung eines Peak-Signals zu einem Track auf der Position oder der Änderung der Position des Peak-Signals in dem ein-dimensionalen Signalraum basiert und die Änderung eines Peak-Signals für die nächste Messung mittels eines Schätzers geschätzt wird.

**Claims**

1. Device for inspecting flat objects and for detecting boundary layers (g1, g2) of these objects, with:

   an optical measuring system according to the spectral interference (SCI) method for measuring distances with a sensor, the measuring system provides peak signals whose position in a one-dimensional signal space corresponds to the distance between the sensor and a boundary layer or
   between boundary layers;

      - an evaluation unit which is designed to evaluate the peak signals in a tracking process and to assign a predetermined peak type to a peak signal;
      - wherein
      - the evaluation unit assigns peak signals detected in a measurement to different tracks (T1, T2, T3);
      - tracks are each updated with the assigned new peak signal;
      - the assignment of a peak signal to a track is based on the position or the change of position of the peak signal in the one-dimensional signal space;
      - all peak signals of a track are assigned to the same peak type; and
      - the change of a peak signal is estimated for the next measurement by means of an estimator.

2. Device according to claim 1, **characterized in that** the tracking process comprises at least two of the following process steps:

      - Assigning a detected peak signal to a track;
      - Updating an existing track with the peak signals of the current measurement;
      - Adjusting the properties of the estimator based on an analysis of the measurement and the noise of the process;
      - Generating of a new track based on unassignable peak signals.

3. Device according to claim 1 or 2, **characterized in that** the evaluation unit is adapted to perform a track classification, which preferably comprises at least two of the following classification modules:

      - Verification of a track as a series of measurements of detected peak signals and/or verification of unassignable peak signals as the starting point of a new track;
- analyzing the change of position of a peak signal, preferably by analyzing the movement of the peak signal, and assigning the peak signal to one of the peak types based on the analysis;
- excluding a track and preferably deleting a track depending on a continuity criterion.

4. Device according to one of the preceding claims, **characterized in that** the tracking process for assigning a detected peak signal to a track directly influences the peak position by the targeted use of the distance regulation (AF) between sensor and measurement object and uses the resulting peak position change for the assignment to a track.

5. Device according to any of the preceding claims, **characterized in that** the tracking process for assigning a detected peak signal to a track comprises a global nearest neighbor algorithm, preferably implemented according to the "Hungarian method".

6. Device according to any one of the preceding claims, **characterized in that** the estimator is a Kalman filter.

7. Device according to claim 6, **characterized in that** the Kalman filter comprises a system model based on a constant velocity of the peak signals.

8. Device according to claim 6, **characterized in that** the Kalman filter comprises a system model based on a constant acceleration of the peak signals.

9. Device according to any one of claims 6 to 8, **characterized in that** a process covariance is used in the Kalman filter to limit the influence of an a priori estimate on the system state of the device.

10. Device according to claim 9, **characterized in that** the process covariance is used to increase the covariance of an estimation error and to limit the influence of the a priori estimate on the system state of the device.

11. Device of any one of claims 6 to 10, **characterized in that** the Kalman filter is used for a time update and estimation and for a measurement value update and correction in the tracking process, and preferably after each of the updates the Kalman filter is used with the a posteriori results of the previous measurement.

12. Device according to any one of claims 6 to 11, **characterized in that** the influence of a noise of the device on the tracking process is reduced by forming a moving average of the detected peak signals over a predetermined number of measurements.

13. Device according to the preceding claim, **characterized in that** the device comprises a ring buffer and the ring buffer is used to determine the moving average.

14. Device according to any one of claims 6 to 13, **characterized in that** the assignment of a peak signal to a track is based on a tolerance band or tolerance range for the position of the peak signal to the track and the tolerance band or tolerance range is preferably determined depending on the sliding standard deviation of the position of the peak signal to the track.

15. Device according to any one of the preceding claims, **characterized in that** the use of a track for a tracking of peak signals is enabled, preferably according to a track classification according to claim 3, if the track has a predetermined number of assignments of peak signals to the track.

16. Method for inspecting flat objects and detecting boundary layers (g1, g2) of these objects according to the spectral interference (SCI) method, comprising the following steps:

- Measurement of distances by means of a sensor (1) of a measuring system;
- Generating of peak signals whose position in a one-dimensional signal space corresponds to the distance between the sensor and a boundary layer or between boundary layers;
- Evaluating the detected peak signals in a tracking process;
- Assigning a peak signal to a predetermined peak type;
- Assigning the peak signals acquired in a measurement to different tracks (T1, T2, T3), whereby all peak signals of a track are assigned to the same peak type;
- Updating the track with the new assigned peak signal;

wherein the assignment of a peak signal to a track is based on the position or change of the position of the peak signal in the one-dimensional signal space, and the change of a peak signal for the next measurement is estimated using an estimator.

**Revendications**

1. Dispositif pour l'inspection d'objets plats et pour la détection de couches limites (g1, g2) de ces objets, avec :

   un système de mesure optique selon le procédé de l'interférence spectrale (SCI) pour mesurer des distances avec un capteur, le système de mesure fournissant des signaux de pic dont la position dans un espace de signal unidimensionnel correspond à la distance entre le capteur et
   une couche limite ou entre des couches limites;

      - une unité d'évaluation qui est conçue pour évaluer les signaux de pic dans un processus de suivi et pour attribuer un type de pic prédéfini à un signal de pic;
      - dans lequel
      - l'unité d'évaluation associe les signaux de pic détectés lors d'une mesure à différentes pistes (T1, T2, T3);
      - les pistes sont actualisées à chaque fois avec le nouveau signal de pic attribué;
      - l'attribution d'un signal de pic à une piste est basée sur la position ou le changement de position du signal de pic dans l'espace de signal unidimensionnel;
      - tous les signaux de pic d'une piste sont attribués au même type de pic; et
      - la modification d'un signal de pic est estimée pour la mesure suivante au moyen d'un estimateur.

2. Dispositif selon la revendication 1, **caractérisé en ce que** le processus de suivi comprend au moins deux des étapes de processus suivantes :

      - Affectation d'un signal de pic détecté à une piste;
      - Mise à jour d'une piste existante avec les signaux de pic de la mesure actuelle;
      - Ajustement des propriétés de l'estimateur sur la base de l'analyse de la mesure et du bruit du processus;
      - Création d'une nouvelle piste basée sur des signaux de pic non attribuables.

3. Dispositif selon la revendication 1 ou 2, **caractérisé en ce que** l'unité d'évaluation est conçue pour effectuer une classification de piste, qui comprend de préférence au moins deux des modules de classification suivants :

      - Vérification d'une piste en tant que série de mesures de signaux de pic détectés et/ou vérification de signaux de pic non attribuables en tant que point de départ d'une nouvelle piste;
      - Analyse du changement de position d'un signal de pic, de préférence en analysant le mouvement du signal de pic, et attribution du signal de pic à l'un des types de pics sur la base de l'analyse;
      - l'exclusion d'une piste et, de préférence, la suppression d'une piste en fonction d'un critère de continuité.

4. Dispositif selon l'une des revendications précédentes, **caractérisé en ce que** le processus de suivi pour l'attribution d'un signal de pic détecté à une piste influence directement la position du pic par l'utilisation ciblée de la régulation de la distance (AF) entre le capteur et l'objet de mesure et utilise la modification de la position du pic qui en résulte pour l'attribution à une piste

5. Dispositif selon l'une des revendications précédentes, **caractérisé en ce que** le processus de suivi pour l'affectation d'un signal de pic détecté à une piste comprend un algorithme Global-Nearest-Neighbour, qui est de préférence mis en œuvre selon la "méthode hongroise".

6. Dispositif selon l'une des revendications précédentes, **caractérisé en ce que** l'estimateur est un filtre de Kalman.

7. Dispositif selon la revendication 6, **caractérisé en ce que** le filtre de Kalman comprend un modèle de système basé sur une vitesse constante des signaux de pic.

8. Dispositif selon la revendication 6, **caractérisé en ce que** le filtre de Kalman comprend un modèle de système basé sur une accélération constante des signaux de pic.

**9.** Dispositif selon l'une des revendications 6 à 8, **caractérisé en ce qu'**une covariance de processus est utilisée dans le filtre de Kalman pour limiter l'influence d'une estimation a priori sur l'état du système du dispositif.

**10.** Dispositif selon la revendication 9, **caractérisé en ce que** la covariance de processus est utilisée pour augmenter la covariance d'une erreur d'estimation et pour limiter l'influence de l'estimation a priori sur l'état du système du dispositif.

**11.** Dispositif selon l'une des revendications 6 à 10, **caractérisé en ce que** le filtre de Kalman est utilisé pour une mise à jour temporelle et une estimation et pour une mise à jour de mesure et une correction dans le processus de suivi et, de préférence, après chacune des mises à jour, le filtre de Kalman est utilisé avec les résultats a posteriori de la mesure précédente.

**12.** Dispositif selon l'une des revendications 6 à 11, **caractérisé en ce que** l'influence d'un bruit du dispositif sur le processus de suivi est réduite en établissant une moyenne glissante des signaux de pic détectés sur un nombre prédéterminé de mesures.

**13.** Dispositif selon la revendication précédente, **caractérisé en ce que** le dispositif comprend un tampon circulaire et **en ce que** le tampon circulaire est utilisé pour déterminer la moyenne glissante.

**14.** Dispositif selon l'une des revendications 6 à 13, **caractérisé en ce que** l'association d'un signal de pic à une piste est basée sur une bande ou une plage de tolérance pour la position du signal de pic par rapport à la piste, et la bande ou la plage de tolérance est de préférence déterminée en fonction de l'écart-type glissant de la position du signal de pic par rapport à la piste.

**15.** Dispositif selon l'une des revendications précédentes, **caractérisé en ce que** l'utilisation d'une piste est autorisée pour un suivi de signaux de pic, de préférence selon une classification de piste selon la revendication 3, lorsque la piste présente un nombre prédéterminé d'associations de signaux de pic avec la piste.

**16.** Procédé d'inspection d'objets plats et de détection de couches limites (g1, g2) de ces objets selon la méthode de l'interférence spectrale (SCI), comprenant les étapes suivantes :

- Mesure de distances au moyen d'un capteur (1) d'un système de mesure;
- Génération de signaux de pic dont la position dans un espace de signal unidimensionnel correspond à la distance entre le capteur et une couche limite ou entre des couches limites;
- Évaluation des signaux de pic détectés dans un processus de suivi;
- Affectation d'un signal de pic à un type de pic prédéfini;
- Affectation des signaux de pic détectés dans une mesure à différentes pistes (T1, T2, T3), tous les signaux de pic d'une piste étant affectés au même type de pic;
- mise à jour de la piste avec le nouveau signal de pic attribué;

l'attribution d'un signal de pic à une piste étant basée sur la position ou le changement de position du signal de pic dans l'espace de signal unidimensionnel et le changement d'un signal de pic étant estimé pour la mesure suivante au moyen d'un estimateur.

## Fig. 1a

## Fig. 1b

Fig. 2a

# Fig. 2b

# Fig. 2c

## Fig. 2d

## Fig. 2e

# Fig. 3

# Fig. 4

# Fig. 5

# Fig. 6

Start

Nein ← Messwert zugeordnet? → Messwert

Ja

Messwert Transformation

KALMAN: Messwert-Aktualisierung mit Schätzwert

KALMAN: Messwert-Aktualisierung

Trackgeschwindigkeit-Ringpuffer aktualisieren

Autofokusbewegung-Ringpuffer aktualisieren

Innovation-Ringpuffer aktualisieren

Abstimmen der Kovarianzen Q und R

Track-Metadaten aktualisieren

Toleranzband-Größe anpassen

KALMAN: Zeit-Aktualisierung

Ende

# Fig. 7a

# Fig. 7b

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7139411 B
- US 7684592 B
- WO 2013017533 A1
- DE 102016116029 A1
- US 6278401 B

**In der Beschreibung aufgeführte Nicht-Patentliteratur**

- **IGOR GUROV et al.** Analysis of low-coherence interference fringes by the Kalman filtering method. *JOURNAL OF THE OPTICAL SOCIETY OF AMERICA A,* 01. Februar 2004, vol. 21 (2